(19) Europäisches Patentamt
European Patent Office
Office européen des brevets

(11) **EP 3 528 161 A1**

(12) **EUROPEAN PATENT APPLICATION**

(43) Date of publication:
**21.08.2019 Bulletin 2019/34**

(21) Application number: **18157472.4**

(22) Date of filing: **19.02.2018**

(51) Int Cl.:
**G06F 21/36** *(2013.01)*      **H04L 29/06** *(2006.01)*
**H04L 9/32** *(2006.01)*      *G06Q 20/20* *(2012.01)*
*G06F 3/0488* *(2013.01)*      *G06F 21/83* *(2013.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Skeyecode**
**75008 Paris (FR)**

(72) Inventor: **LELEU, Jean-Luc**
**75013 PARIS (FR)**

(74) Representative: **de Roquemaurel, Bruno et al**
**Omnipat**
**24 place des Martyrs de la Résistance**
**13100 Aix en Provence (FR)**

(54) **METHOD FOR SIGNING A TRANSACTION**

(57)      The invention relates to a method for performing a sensitive operation requiring authenticating a user, the method comprising: receiving by a user terminal (UT), from an authentication server (ASRV), a software component (GC) configured to generate random pixels (PXi) having a probability lower than 100% to be visible in image frames to be displayed; executing the software component by the user terminal, to generate an image frame at a display refresh rate; displaying the generated image frames, the displayed image frames including information (SD, KYL, CC, ND) which is machine unintelligible as being formed of the random pixels, the information becoming intelligible to a user at the display refresh rate; acquiring a response (POSi) from the user in relation with the displayed information; transmitting the response to a secure processor (SE) connected to the user terminal, the user being authenticated by the secure processor when the first secret data correspond to second secret data (PC), the sensitive operation being performed by the secure processor if the user is authenticated.

Fig. 3

Printed by Jouve, 75001 PARIS (FR)

**Description**

TECHNICAL FIELD

The present invention relates to a method and device for securely signing a transaction using a non-secure terminal and a remote server, based on user authentication. The transaction may involve a cryptocurrency, and more particularly a decentralized cryptocurrency.

BACKGROUND

A cryptocurrency is a digital asset intended to be used in a transaction as a medium of exchange using cryptography to secure the transaction. Cryptography is also used to secure the creation of additional currency units, and to verify the transfer of funds. A decentralized cryptocurrency operates independently from a central banking organization.

Currently, over a thousand cryptocurrency specifications exist, most are similar to and derived from bitcoin which is the first fully implemented decentralized cryptocurrency. Within cryptocurrency systems the safety, integrity and balance of ledgers are maintained by a community of mutually distrustful parties referred to as miners. Miners are members of the general public using their computers to help validate and timestamp transactions adding them to the ledger in accordance with a particular timestamping scheme. Miners have a financial incentive to maintain the security of a cryptocurrency ledger. Cryptocurrencies use various timestamping schemes to avoid the need for a trusted third party to timestamp transactions added to a blockchain ledger. The first timestamping scheme invented was the proof-of-work scheme. The most widely used proof-of-work schemes are based on SHA-256, which is used by bitcoin. To receive or spend cryptocurrency units there is needed public and private keys which are stored in a software or hardware cryptocurrency wallet of each party of the cryptocurrency. Each cryptocurrency transaction is signed by the sending party of the transaction using the private key. The transaction is further checked and written into the blockchain ledger by miners.

It would be desirable to produce the signature of a cryptocurrency transaction from a mobile terminal. However, this raises security problems, notably because "malicious software" or "malware" may be executed by the main processor (CPU) of the terminal. The malware may be able to access all or a part of the memories accessible by the main processor, and thus may be maliciously configured to retrieve the private key required to sign a transaction or to modify data related to the amount or receiving party of the transaction.

To ensure the security of such transactions, it has already been proposed to entrust cryptographic computations to a dedicated secure element, such as the processor of a UICC ("Universal Integrated Circuit Card") card, e.g. a SIM (subscriber identification module) card with which cell phones are generally equipped. However, accessing secure functions installed in the processor of a SIM card generally entails inputting a secret code (PIN code) by means of a keypad or a touch-sensitive surface connected to the main processor of the terminal. In a classical configuration, the secret code input by the user necessarily passes through the main processor. Malware executed by the main processor can therefore access this secret code.

The patent application WO2012/107698 filed by the Applicant discloses a method using a graphic processor of the terminal as a secure element to perform transaction. This method comprises steps of establishing a secure communication link between the graphic processor of the terminal and an authentication server, and displaying a virtual keypad with keys arranged in a random order. The image of the keypad is displayed using visual cryptography, by successively displaying complementary frames in which the labels of the keys are not intelligible, the complementary frames being combined into an intelligible image by the visual system of the user thanks to the retinal remanence thereof. In this way, even if a malicious program running on the main processor of the terminal is able to access the positions of the keys touched by the user during input of a secret code, it cannot, by taking a succession of screenshots, determine which labels correspond to the touched keys.

However, this method requires important calculation resources that are not available in all portable devices such as all of the existing smartphones on the market.

To secure transactions performed using a terminal connected to a web site, it has been proposed to use a single-use secret code which is transmitted to the user each time a transaction needs to be validated. According to a first solution, the single-use secret code is transmitted to the user via a distinct communication channel, e.g. via a phone link or SMS (Short Message Service), the user being required to input the received secret code on the terminal to validate the transaction. In addition, the solution using a secret code transmitted by SMS obviously does not provide sufficient high security level since it has already been subjected to successful attacks. This solution is burdensome for the users who do not always have nearby a phone and mobile or wireless network coverage. Another known solution provides an additional hardware device to each of the users, this device comprising a secure element to store secret data, a keypad and a display for the user to securely input credentials. This solution requiring an additional hardware device is costly.

Therefore, it may be desirable to propose a method for securely signing transaction data by means of a non-secure user terminal. It may also be desirable to protect secret data input by users and transaction data transiting through such a non-secure terminal. Further, it may desirable to make the proposed method compatible with all existing terminals, even with terminals of low computation power.

SUMMARY

A method is described for generating random numbers. The method may include A method for performing a sensitive operation requiring authenticating a user, the method comprising: receiving by a user terminal, from an authentication server, a software component configured to generate random pixels having a probability lower than 100% to be visible in image frames to be displayed; executing the software component by the user terminal, at a rate corresponding to a frame display refresh rate, to generate an image frame at the display refresh rate; displaying the generated image frames at the frame display refresh rate, the displayed image frames including information which is machine unintelligible as being formed of the random pixels, the information becoming intelligible to a user at the display refresh rate; acquiring a response from the user in relation with the displayed information; transmitting the response or first secret data derived from the response using the information, to a secure processor connected to the user terminal, the user being authenticated by the secure processor when the first secret data correspond to second secret data shared by an authenticate user and the secure processor, the sensitive operation being performed by the secure processor if the user is authenticated.

According to an embodiment, the method further comprises: generating the information by the secure processor; encrypting the information such that only the authentication server can decrypt the encrypted information, and transmitting the encrypted information to the authentication server, the software component being generated by the authentication server as a function of the information; and transmitting the acquired response from the user terminal to the secure processor; and deriving, by the secure processor, the first secret data from the acquired response using the information.

According to an embodiment, the method further comprises: generating the information by the authentication server, the software component being generated by the authentication as a function of the information; transmitting the acquired response from the user terminal to the authentication server; deriving, by the authentication server, the first secret data from the acquired response using the information; encrypting, by the authentication server, the first secret data such that only the secure processor can decrypt the encrypted information; and transmitting the encrypted first secret data to the secure processor.

According to an embodiment, the method further comprises: transmitting the acquired response from the user terminal to the secure processor; generating a signature of the acquired response by the secure processor; transmitting the signature to the authentication server; and verifying the signature by the authentication server, the authentication of the user being allowed only when the signature is correct.

According to an embodiment, the displayed image frames include data related to the sensitive operation, the software component being generated as a function of the data related to the sensitive operation.

According to an embodiment, the information comprises a secret code displayed in the displayed image frames so as to be machine unintelligible as being formed of the random pixels, the secret code becoming intelligible to a user at the display refresh rate, the user being requested to provide the secret code in the acquired response, the first secret data comprising an acquired secret code, the user being authenticated when the acquired secret code corresponds to the displayed secret code.

According to an embodiment, the information specifies an ordered series of key labels of a keypad to be displayed in the image frames, the response from the user comprising key positions of keys of the keypad selected by the user.

According to an embodiment, the information specifies a biometric challenge to be displayed in the image frames, the response acquired from the user comprising acquired biometric data inputted by the user using a biometric sensor, wherein: the acquired biometric data are transmitted to the secure processor which compares the acquired biometric data with reference biometric data stored by the secured processor, or the acquired biometric data are transmitted to the authentication server and if the acquired biometric data correspond with reference biometric data stored by the authentication server, the authentication server transmits to the secured processor the first secret data encrypted such that only the secure processor can decrypt the encrypted information.

According to an embodiment, the software component is configured to provide the output data in one of the two binary states with a probability comprised between 12.5% and 87.5% or set to 50%, in response to the random selection.

According to an embodiment, the software component is configured to generate encrypted parts of an image frame, the method further comprising: executing the software component; decrypting each generated encrypted image frame parts, using a decrypting mask which is transmitted from the authentication server; inserting each decrypted image frame parts in an image frame background to generate an image frame; and displaying the generated image frame.

According to an embodiment, the software component is encoded as a garbled circuit comprising circuit inputs, circuit outputs, logic gates and wires, each logic gate having two inputs and one output, each wire having a first end connected to one of the circuit inputs or to one of the logic gate outputs and a second end connected to one of the logic gate inputs or to one of the circuit outputs, the garbled circuit being generated by selecting a valid data for each binary state of each of the wires, and by computing for one logic gate of the garbled circuit, truth table values as a function of each valid data of each input of the logic gate, each valid data of the output of the logic gate and a logic operation performed by the logic gate.

Embodiments may also relate to a user terminal configured to: receive by the user terminal, from an authentication server, a software component configured to generate random pixels having a probability lower than 100% to be visible in image frames to be displayed; execute the software component by the user terminal, at a rate corresponding to a frame display refresh rate, to generate an image frame at the display refresh rate; display the generated image frames at the frame display refresh rate, the displayed image frames including information which is machine unintelligible as being formed of the random pixels, the information becoming intelligible to a user at the display refresh rate; acquire a response from the user in relation with the displayed information; transmit the response or first secret data derived from the response using the information, to a secure processor connected to the user terminal, the user being authenticated by the secure processor when the first secret data correspond to second secret data shared by an authenticate user and the secure processor, and the sensitive operation being performed by the secure processor if the user is authenticated.

According to an embodiment, the terminal is configured to execute the operations performed by a terminal in the method above-defined method.

Embodiments may also relate to a secure element configured to execute the operations performed by a secure processor in the above-defined method, wherein the secure element is connected to a main processor of a terminal.

Embodiments may also relate to a server configured to execute the operations performed by a server in the above-defined method, the server being linked to the terminal through a data transmission network.

Embodiments may also relate to computer program product loadable into a computer memory and comprising code portions which, when carried out by one or more processors of a computer, configure the computer to carry out the above-defined method.

BRIEF DESCRIPTION OF THE DRAWINGS

The method and/or device may be better understood with reference to the following drawings and description. Non-limiting and non-exhaustive descriptions are described with the following drawings.

Figure 1 is a block diagram of user terminals performing transactions with remote servers;
Figure 2 is a block diagram of a user terminal;
Figure 3 is a sequential diagram showing authentication steps, according to an embodiment;
Figure 4 is a sequential diagram showing authentication steps, according to another embodiment;
Figure 5 is a sequential diagram of initialization steps performed by a user terminal, and an authentication server, according to an embodiment;
Figures 6A and 6B represent respectively an image frame displayed by the user terminal, and a corresponding resultant image which can be observed by a user of the user terminal, according to an embodiment;
Figure 7 represents two layers of a part of an image frame which are displayed superimposed by the user terminal, a corresponding part of a resultant image frame which is displayed by the user terminal, and a corresponding part of a resultant image which can be observed by a user of the user terminal, according to an embodiment;
Figure 8 is a block diagram of an application program executed by the user terminal, according to an embodiment;
Figure 9 is a block diagram of a circuit implemented by software in the user terminal, according to an embodiment;
Figure 10 is a block diagram of a database describing the circuit implemented in the user terminal, according to an embodiment;
Figure 11 is a block diagram illustrating a processing performed by the application program for displaying the image frame of Figure 6A, according to an embodiment;
Figure 12 is a block diagram of a part of the circuit of Figure 9, according to another embodiment;
Figures 13A and 13B illustrate respectively an image frame displayed by the user terminal, and a corresponding resultant image which can be observed by a user of the user terminal, according to another embodiment;
Figures 14A and 14B illustrate respectively an image frame displayed by the user terminal, and a corresponding resultant image which can be observed by the user, according to another embodiment
Figures 15A and 15B illustrate respectively an image frame displayed by the user terminal, and a corresponding resultant image which can be observed by the user, according to another embodiment.

DETAILED DESCRIPTION

In the figures, like referenced signs may refer to like parts throughout the different figures unless otherwise specified.

In the following, the term "secure" is employed according to its plain meaning to those of ordinary skill in the art and encompasses, in different embodiments, security arising from techniques such as encryption, or other types of software or hardware control used to isolate information from the public or to protect it against unauthorized access or operation. The expressions "secure communication" and "secure communication link" refer to communications that are encrypted using public/private key pairs, or symmetrical key encryption with keys shared between communicating points. "Secured communications" can also involve virtual private networks, and other methods and techniques used to establish authenticated and encrypted communications between the communicating points.

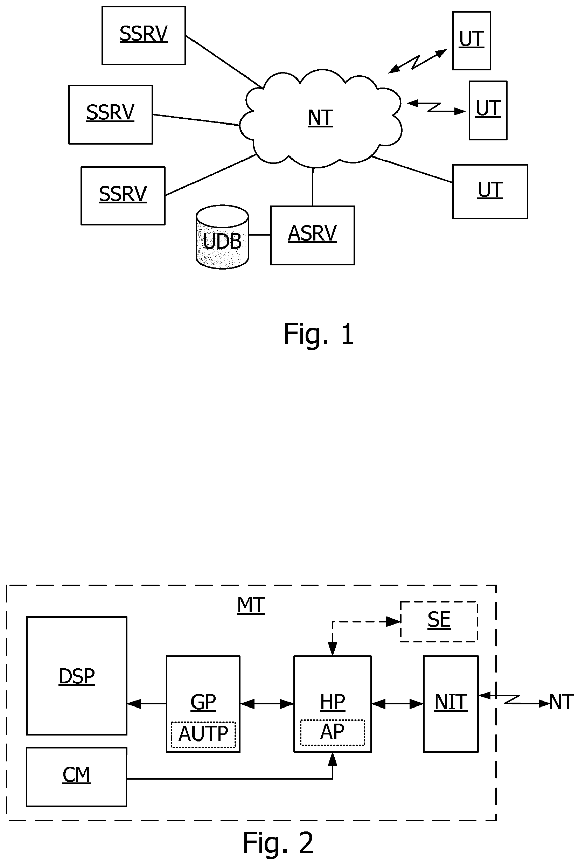

Figure 1 illustrates user terminals UT that can perform transactions with remote service provider servers or application servers SSRV through communication networks NT. In the following, the term "user terminal" shall be synonymous and refer to any device that can communicate with one or more remote servers such as application servers and service provider servers. Thus, a user terminal can be for instance a mobile phone, a smartphone, a personal computer a digital tablet or any equipment including communication and display capabilities. Those two functionalities may also be provided by two or several devices, provided that those devices are securely associated and/or linked. The communications networks may include IP (Internet Protocol) networks, such as Internet, mobile or cellular networks, wireless networks, and any kind of network that can be used to establish a communication link between a user terminal and a remote server.

According to an embodiment, an authentication server ASRV is configured to implement a method for authenticating a user during transactions involving an application or service provider server SSRV and a user terminal UT, based on a two-factor authentication scheme.

Figure 2 illustrates a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT can further comprise a secure element SE, such as a secure processor that can be standalone or embedded into a smartcard UICC. The secure processor SE can be for example a SIM ("Subscriber Identity Module") card or a USIM ("Universal Subscriber Identity Module"), providing an access to a cellular network. The secure processor SE can include an NFC ("Near Field Communication") circuit to communicate with a contactless reader. The NFC circuit can be embedded into a SIM card (SIM-NFC) or UICC, or in a SoC ("System on Chip") circuit, or in an external smartcard or memory card, for example an "SD card".

The communication circuits NIT of the terminal UT may include a mobile telecommunication circuit giving access to a mobile cellular network and/or to the Internet network, through the cellular network, and/or a wireless communication circuit (Wi-Fi, Bluetooth™ (low energy - BLE - or not), an NFC circuit, and/or any other radio frequency or wireless communication methodology), and/or any other wired or wireless connection circuit that can be linked to a data transmission network such as Internet. The communication link between the main processor CPU of the user terminal UT and the secure element SE may be a wired link e.g. in the case of a SIM or USIM card, or a wireless link (NFC, BLE) e.g. in the case of an external smartcard or memory card. The communication link between the main processor CPU of the user terminal UT and the servers ASRV, SSRV may be performed by means of one or more data transmission networks, such as mobile networks and Internet.

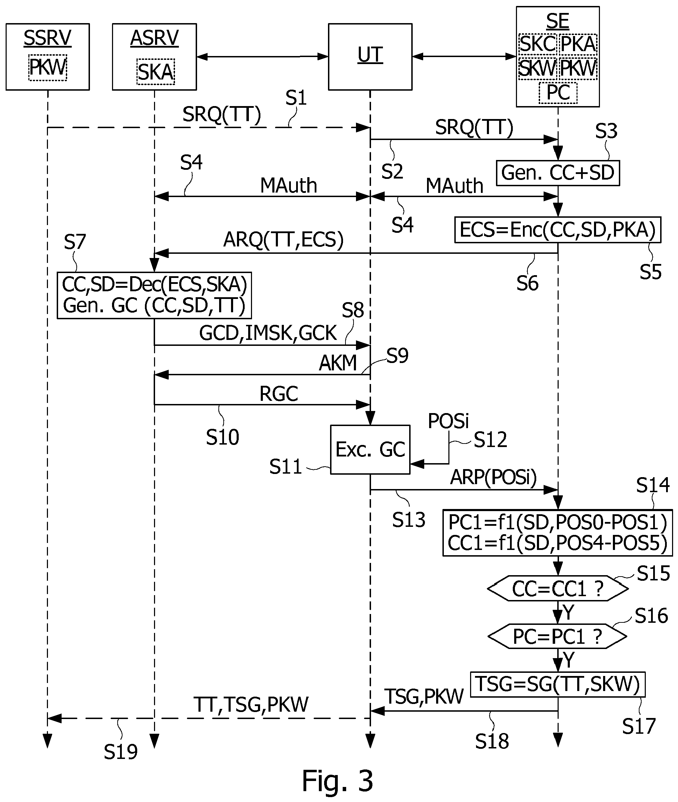

Figure 3 illustrates authentication steps S1 to S19, which are successively performed to generate a signature for a transaction, according to an embodiment. The generation of such a signature requires the user to be authenticated and to have a secure element SE configured to store secret data and to perform cryptographic operations. The secure element SE is for example a smartcard linked to the terminal UT using a contact, or contactless, or wireless communication link.

In step S2, an application APP installed in the user terminal transmits to the secure element SE a request SRQ to generate a signature of transaction data TT. The transaction data TT comprise for example an amount, a currency identifier, and an identifier of a recipient party of the transaction. The request SRQ may come from a service provider server SSRV of a service corresponding to the recipient party of the transaction (step S1). In step S3, the secure element SE receives the request SRQ and the transaction data TT, and randomly generates a seed number SD and validation code CC, preferably of single-use.

In step S4, the secure element SE and the server ASRV perform a mutual authentication using respective pairs of public and private keys, through the user terminal UT, each party having a public key of the other party. The mutual authentication may be triggered by the application APP which transmits a command to the secure element. This command may include a public key PKA of the server ASRV. The mutual authentication may also comprise checking certificates delivered by a trusted party, that are associated to the pairs of private and public keys of both the server ASRV and the secure element SE. The following steps S5 to S19 are performed only if the mutual authentication is conducted successfully.

In step S5, the secure element encrypts the validation code CC and the seed number SD. The encryption may be performed using the public key PKA q of the server or a secret session key generated and/or exchanged by the server ASRV and the secure element SE during or after the mutual authentication. In step S6, the secure element SE transmits an authentication request ARQ for the transaction, to the server ASRV. The authentication request ARQ comprises the transaction data TT and the encrypted validation code and seed number ECS.

In step S7, the authentication server ASRV receives the request ARQ, and decrypts the received encrypted validation code and seed number ECS. The authentication server ASRV further generates a distinct dedicated software component GC for the user terminal UT, using the validation code CC, the seed number SD and the transaction data TT. The software component GC is designed to display the validation code CC. Therefore, the software component is specific to this code. In step S8, the server ASRV sends to the terminal UT structure and content data GCD defining the software component GC and including input data of the software component in an encrypted form, a final mask IMSK to be applied to image frame parts generated by the software component, and a cryptographic data GCK to be used to execute the software component. In step S9, the application APP executed by the terminal UT receives the data GCD, IMSK, GCK related to the software component GC, and may send an acknowledge message AKM to the server ASRV. If the application APP is not currently running on the terminal UT, the reception of the data related to the software component may trigger the execution of the application APP. In step S10, the server ASRV may send to the terminal UT a request RGC to execute the software component GC. In step S11, the reception of the notification RGC triggers the execution by the application APP of the software component GC which displays image frames showing for example a keypad having keys, a message MSG containing the transaction data TT and the validation code CC, for example of two or more digits.

According to an embodiment, the keys of the displayed keypad are arranged in the displayed frames according to a layout which can be determined from the seed number SD securely transmitted by the secure element SE in step S6. In addition, only parts of labels of the keys and of the validation code are displayed in each frame, such that the key labels and the validation code CC are intelligible only to the human visual system thanks to the persistence of the latter, but not in screenshots of the display screen DSP. According to an embodiment, the validation code CC is superimposed on the message MSG (or vice-versa), such that the message cannot be changed without disturbing the validation code display.

In step S12, the user of the terminal UT inputs a password PC and the displayed validation code CC. In the example of a smartphone, the user uses the displayed keypad, and touches corresponding positions POSi of the keys of the displayed keypad. In step S13, the application APP transmits to the secure element SE an authentication response ARP containing the sequence of positions POSi selected by the user. In step S14, the secure element SE determines a password PC1 and a code CC1 corresponding to the positions POSi typed by the user. The secure element SE shares with the server ASRV the knowledge of a function f1 determining the key layout of the displayed keypad from the seed number SD. Therefore, the secure element SE can determine from the seed number SD the displayed keypad layout and thus can determine the keys labels corresponding to the positions POSi, and consequently the values PC1, CC1 of the password and validation code typed by the user. In step S15, the secure element SE checks consistency between the typed validation code CC1 and the validation code CC generated in step S3. If the typed validation code CC1 is consistent with the validation code CC stored in the secure element SE, the latter performs the following step S16. In step S16, the secure element SE checks consistency between the typed password PC1 and the password PC securely stored in a memory of the secure element SE. If the typed password PC1 is consistent with the password PC stored in the secure element SE, the latter performs the following steps S17 and S18. In step S17, the secure element SE computes a signature TSG of the transaction data TT using a private key SKW securely stored by the secure element SE and dedicated to signing transactions. Then the computed signature TSG may be transmitted to the user terminal UT in step S18. If this signature is requested by the server SSRV (in step 21), the terminal UT may transmit the signature TSG to the server SSRV in step S19.

In this way, only the owner of the secure element SE, having the knowledge of the password PC and the displayed validation code CC can produce the transaction signature TSG. Further, this operation requires that the user saw the displayed images showing the keypad with a key layout corresponding to the seed number SD, the validation code CC and the transaction data TT. Further, the authentication request ARQ can be only transmitted from a trusted secure element to a trusted server (ASRV), and a software component GC related to the secure element SE is only transmitted to a user terminal connected to the secure element. In addition, the server ASRV does not need to know the secret data (PC) used to authenticate the user. The software component GC may be executed by another terminal, but without the signature TSG that can be only computed by the secure element SE, the transaction signature TSG cannot be generated. Step S3 may be performed by the server ASRV, provided that the generated secret data CC and SD are further securely transmitted to the secure element, for example, encrypted using a public key of the latter, before step S14.

Therefore the secure element SE can be used as a hardware cryptocurrency wallet. Also, it can be used for different currencies, each currency having its own pair of private and public keys for signing transactions. Also the secure element can be used with different terminals having the application APP installed therein. To this purpose, the secure element SE can compute and maintain up-to-date a balance in each managed currency, provided that the secure element is also kept informed of credit operations, the signature operation SG being performed for debit operations.

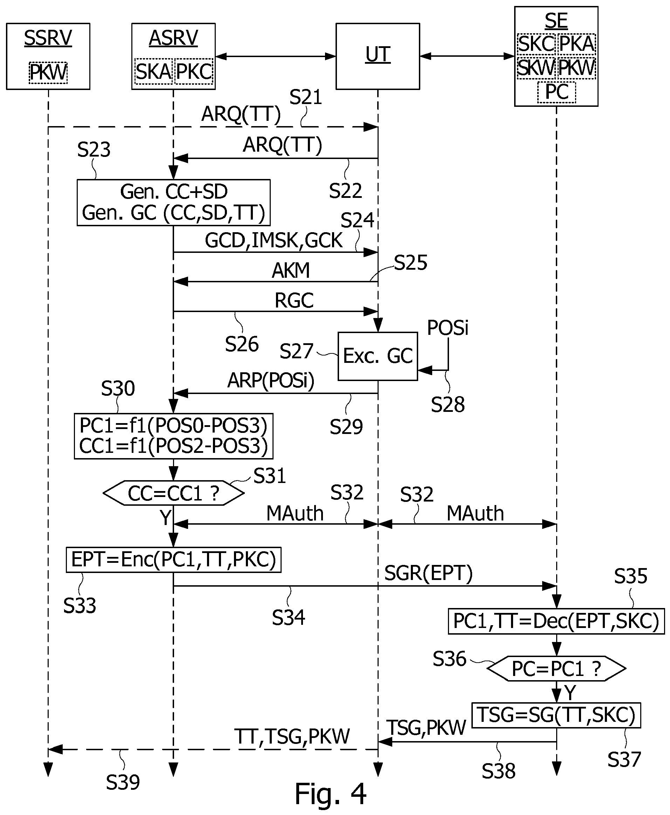

Figure 4 illustrates authentication steps S21 to S39, which are successively performed to generate a signature for a transaction using the secure element SE, according to another embodiment.

In step S22, the application APP installed in the user terminal transmits to the authentication server ASRV a request SRQ to generate a signature of the transaction data TT. The request SRQ may come from the service provider server SSRV (step S21). In step S23, the authentication server ASRV receives the request ARQ, randomly generates the validation code CC, and generates a dedicated software component GC for the user terminal UT, using the validation code CC and the transaction data TT. As in the embodiment of Figure 3, the software component GC is designed to display the validation code CC. Therefore, the software component is specific to this code. The following steps S24 to S28 may be the same as the steps S8 to S12.

In step S29, the application APP transmits to the server ASRV an authentication response ARP containing the sequence of positions POSi selected by the user. In step S30, the server ASRV determines a password PC1 and a code CC1 corresponding to the positions POSi typed by the user. Since the server ASRV generated the software component GC, it knows the key layout of the displayed keypad. Therefore, it can determine the keys labels corresponding to the positions POSi, and consequently the values PC1, CC1 of the password and validation code typed by the user. In step S31, the server ASRV checks consistency between the entered validation code CC1 with the validation code CC generated in step S23. If the typed validation code CC1 is consistent with the validation code CC, the server ASRV performs the following steps S32 to S35.

In step S32, the server ASRV and the secure element SE perform a mutual authentication as in step S4. The following steps S33 to S39 are performed only if the mutual authentication is conducted successfully. In step S33, the server ASRV encrypts the typed password PC1, using the public key PKC of the secure element SE. In step S34, the server ASRV transmits to the secure element SE a signature request SGR containing the encrypted data EPT, and the transaction data TT. In step S35, the secure element SE receives the signature request SGR and decrypts the data EPT using the private key SKC to retrieve the type password PC1. The transaction data TT may be also transmitted to the secure element in an encrypted form. In step S36, the secure element SE checks consistency between the typed password PC1 and the password PC securely stored in a memory of the secure element SE. If the typed password PC1 is consistent with the password PC stored in the secure element SE, the latter performs the following steps S37 and S38 which may be the same as steps S17 and S18 to compute and transmit the signature TSG. If this signature is requested by the server SSRV (in step 21), the terminal UT may transmit the signature TSG to the server SSRV in step S39.

The steps disclosed in Figure 3 or 4 may be performed for any other sensitive operation (performed in step S17 or S37) requiring the user to be authenticated, the use of a secure element adding security level.

According to an embodiment, the secure element SE provided to the user already stores the key pair SKW, PKW for signing transactions, together with the password PC. Besides, the password PC is transmitted to the user, for example by postal mail.

According to an embodiment, the mutual authentication performed in step S32 by the secure element SE and the server ASRV is performed after step S22, and the following steps S23 to S39 are performed only if the mutual authentication is conducted successfully. After step S28, the sequence of positions POSi selected by the user are transmitted by the user terminal UT to the secure element SE to be signed by the latter, e.g. encrypted using the private key SKC of the secure element SE. The signature generated by the secure element SE is inserted into the message ARP containing the positions POSi and transmitted to the server ASRV in step S29. When receiving the message ARP, the server ASRV checks the signature contained in the received message ARP using the public key PKC of the secure element SE. The following steps S30 to S39 are performed only if the signature received in the message ARP is correct. In this way, the positions POSi cannot be successfully transmitted to the server ASRV by another terminal instead of the user terminal UT connected to the secure element SE. In addition, the data related to the software component GC are transmitted by the server ASRV only if the user terminal UT with the secure element SE is connected to the server ASRV.

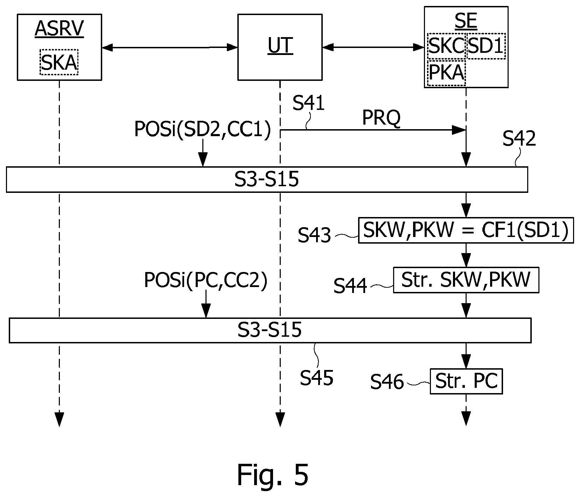

Figure 5 illustrates registration steps S41 to S46, according to another embodiment. The registration steps are configured to personalize the secure element SE to be used as a wallet, such as a cryptocurrency wallet, to validate a transaction. During a previous pre-personalization process, the secure element SE stored the private key SKC which is linked to an identifier of the secure element, such as a serial number. the secure element SE also received or computed a seed number SD1, and received cryptographic functions CF1, SG for deriving a pair of private and public keys from seed numbers, and for signing a transaction according to a cryptocurrency protocol. The secure element SE also needs the public key SKA of the server ASRV. Steps S41 to S46 can be executed once for each wallet to be stored and managed in the secure element. In step S41, the user terminal UT transmits to the secure element SE a registration request PRQ. In step S42, the secure element SE, the user terminal UT and the authentication server ASRV perform together the steps S3 to S15 (Figure 3) to enable the user to securely type positions POSi for a seed number SD2 and a validation code CC1 corresponding to a validation code CC displayed using a software component GC. If in step 15, the validation code CC1 typed by the user is consistent with the validation code CC generated in step S3, the steps S43 to S45 are performed. In steps S43 and S44, the secure element SE computes a pair of private and public keys SKW, PKW, and securely stores the generated key pair in step S44. The key pair SKW, PKW is computed using the seed numbers SD1, SD2 and the cryptographic function CF1. The seed numbers SD1, SD2 may be such that when combined (for example concatenated), they form together a seed of more than 256 bits, for example 512 or 1024 bits, that can be used to generate a strong private key.

In step S45, the secure element SE, the user terminal UT and the authentication server ASRV perform together the steps S3 to S15 (Figure 3) to enable the user to securely type positions POSi for a password PC and a validation code CC2 corresponding to a new validation code displayed using a software component GC. Again, if in step 15, the validation code CC2 typed by the user is consistent with the validation code generated in step S3, the secure element SE perform the step S46. In step S46, the secure element securely stored the password PC typed by the user.

In this way, the provider of the secure element SE does not know and cannot determine the numbers SD2, PC entered by the user.

Each of the steps S42 and S45 may be executed twice, followed with a comparison between the two typed seed numbers SD2 (step S42), and, respectively, with a comparison between the two typed passwords PC, and if the compared values are not the same, the introduction of the corresponding number (SD2, PC) is performed again.

According to another embodiment, the secure element SE provided to the user already stores the key pair SKW, PKW for signing transactions, but does not store any password PC, or this password can be changed by the user. To this purpose, the secure element SE stores a master password with is required to input a new password PC, and registration steps are performed to input the new password to the secure element SE. These registration steps comprises step S41, a modified step S42 for inputting the master password, followed by a verification step for checking the consistency of the typed master password with the master password stored by the secure element. If the typed master password is consistent with the stored master password, the steps S45 and S46 are performed for inputting the new password. Again, the S45 may be executed twice, followed with a comparison between the two typed passwords PC, and if the compared values are not the same, the introduction of the new password PC is performed again.

Each time the steps S3 to S15 are performed, a new software component GC is generated (in step S7) so as to display a new validation code and a keypad with a different key layout. Therefore, a malware installed in the terminal UT or a man-in-the-middle attack between the server ASRV and the user terminal UT cannot discover the typed numbers without executing the software component. If this happens, the hacker performing the attack must send a message ARP to the secure element (as in step S13). Thus the secure element may receive two messages ARP for a same transaction or from the same user terminal UT, one from the authenticated user and one from the hacker. In this case, the secure element SE may decide to invalidate the procedure (transaction signature or secure element personalization), or raise a flag or perform any other specific action related to this event.

The above-described encryption and decryption operations may involve any cryptographic algorithm, such as Diffie-Hellman (DH), Digital Signature Algorithm (DSA), El Gamal, Rivest-Shamir-Adleman (RSA) elliptic curve Diffie-Hellman (ECDH), and Elliptic Curve Digital Signature Algorithm (ECDSA).

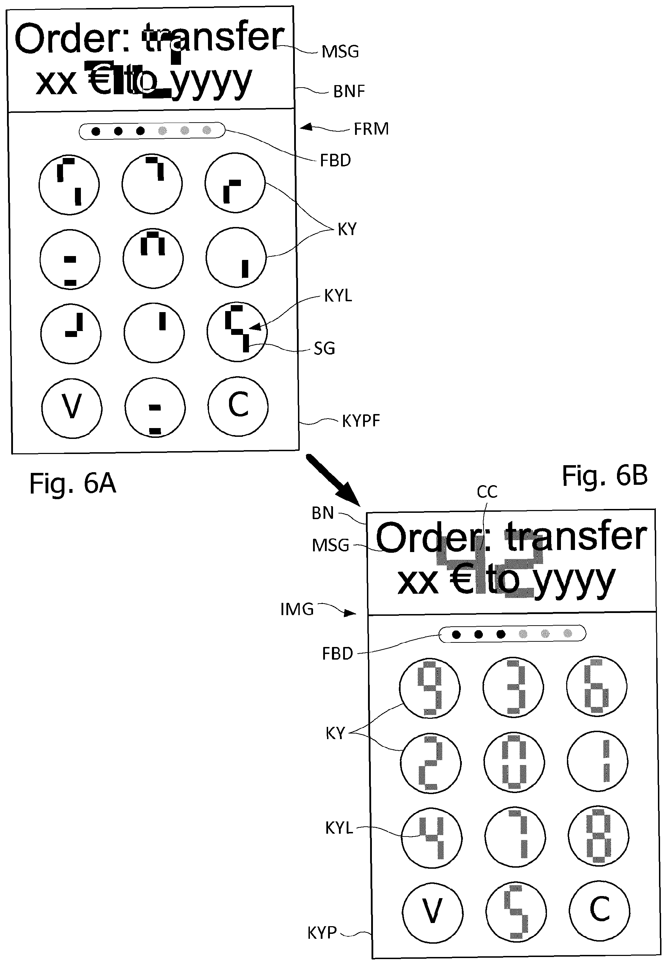

Figure 6A illustrates an example of an image frame FRM displayed by the user terminal UT when it executes the software component GC. The image frame FRM comprises a banner frame BNF displaying the message MSG and the single-use code CC superimposed on the message MSG. The image frame FRM further comprises a keypad image frame KYPF showing for example a twelve-key keypad, each key of the keypad being displayed with a label KYL indicating the function of the key to the user. The keypad comprises an erase key "C" and a validation key "V", and ten keys corresponding to a digit, and having a layout specific to the software component GC which generates the image frame FRM. The image frame FRM may further comprises a display zone FBD where a dot is displayed each time the user touches a new one of the keys KY. In the example of Figure 6A, the display zone FBD shows that three keys were already typed by the user.

In the example of Figure 6A, the keypad comprises four lines of three keys, the first line of the keypad comprising (from left to right) the digits "9", "3" and "6", the second line comprising the digits "2", "0" and "1", the third line comprising the digits "4", "7", and "8" and the fourth line, the validation key "V", the digit "5" and the erase key "C". The label KYL of each digit key is displayed by several segments SG (e.g. seven segments), visible or not, according to the key label KYL to be displayed. According to an embodiment, to prevent the keypad layout from being acquired using a screenshot function of the terminal UT, only a part of the visible segments in each key KY is displayed in each image frame generated by the software component GC. To this purpose, each visible segment to be displayed is present in an image frame FRM generated by the software component GC with a probability lower than 100%, for example equal to 50%. Thanks to its persistence property, the human visual system combines the image frames successively displayed by the terminal UT. Thus the displayed key labels KYL become intelligible to the user, but cannot be captured using a screenshot function. Figure 6B illustrates the displayed image IMG as it is perceptible by the human visual system when the image frames FRM generated by the software component GC are displayed at a sufficiently high frequency (greater than 30 Hz) for example at 60 Hz, such that a new frame generated by the software component is displayed every 16.6 ms. As shown in the example of Figure 6B, the key labels KYL appear in grey to a user when visible segments to be displayed of the key labels are inserted in the frames FRM with a probability lower than 100%.

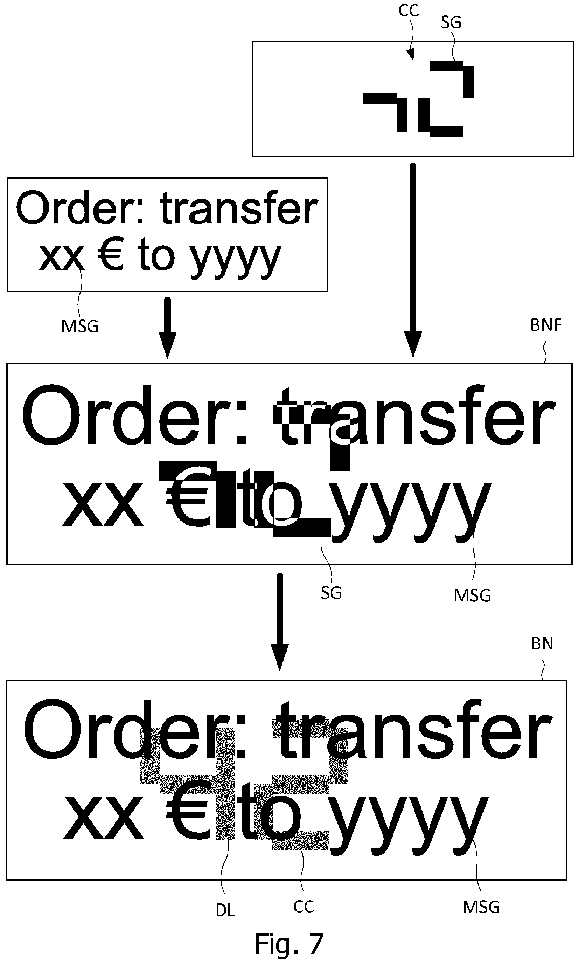

Figure 7 at the top shows one example of two superimposed layers of the banner frame BNF produced by the software component GC and displayed by the terminal UT. The central part of Figure 7 shows the banner frame as it is generated and displayed. The bottom part of Figure 7 shows the banner BN as it can be perceived by the user. The first layer of the banner frame BNF (at the top left of Figure 7) comprises the message MSG "Order: transfer xx € to yyyy" to be displayed. The second layer (at the top right of Figure 7) comprises a two-digit number corresponding to the validation code CC to be entered by the user in the terminal UT. Each digit of the validation code CC is displayed using several segments SG (e.g. seven segments) which are displayed or not as a function of the digit to be displayed. To prevent the validation code CC from being acquired using a screenshot function of the terminal UT, only a part of the visible segments SG is displayed in each image frame FRM generated by the software component GC, such that each visible segment SG to be displayed is present in an image frame FRM generated by the software component GC with a probability lower than 100%, for example equal to 50%. The pixels of the first and second layers may be combined together by a XOR operation. Thus, in the generated banner frame BNF as shown in the central part of Figure 7, the pixels belonging both to the message MSG and to a segment of the validation code CC, are displayed in the background color, when the message and the segment are displayed in a color different from the background color.

The bottom part of Figure 7 illustrates the displayed banner BN as it is perceptible by the human visual system, when the image frames FRM generated by the software component are displayed at a sufficiently high frequency (greater than 30 Hz) for example at 60 Hz, such that a new frame FRM is displayed every 16.6 ms. The two digits labels DL of the validation code CC appear in grey (in the example of Figure 7) to the user, when visible segments to be displayed are inserted in the banner frames BNF with a probability lower than 100%.

According to an embodiment, visible and invisible segments of each digit KYL, DL to be displayed appear in the frames FRM with respective probabilities such that the displayed digits are intelligible for the human visual system, thanks to the persistence of the latter. For example, the generated software components GC are configured to display the invisible segments with a probability of 0 to 15%, and the visible segments with a probability of 50 to 100%. The visible segments forming a key label KYL or a digit of the validation code CC can be displayed with respective probabilities comprised between 50 and 100%, and the invisible segments in a key label or a digit of the validation code CC can be displayed with respective probabilities comprised between 0 and 15%. The display probabilities of the segments forming the digits of the key labels and the validation code CC can be adjusted as a function of the frame display frequency, such that the labels of the displayed digits remain intelligible for the human visual system. Segments or pixels are invisible or visible in the image frame FRM when they are displayed respectively with a background color of the image frame, or with a color different from the background color. The background color is defined by the color of the pixels around the considered segment SG, and may vary as a function of the position of the segment within the image frame FRM.

The displayed keypad KYPF may not need to have a validation key "V", the validation of the typed codes being performed when the user inputs the last digit of the password PC and validation code CC to be typed. For example, if the password PC comprises four digits and the validation code CC two digits, the execution of the software component GC can be ended when the user inputs six digits. The cancel key "C" can be managed either to delete the last typed digit or all the previously typed digits. The effects of the cancel key "C" may be shown to the user by erasing one or all dots in the display zone FBD.

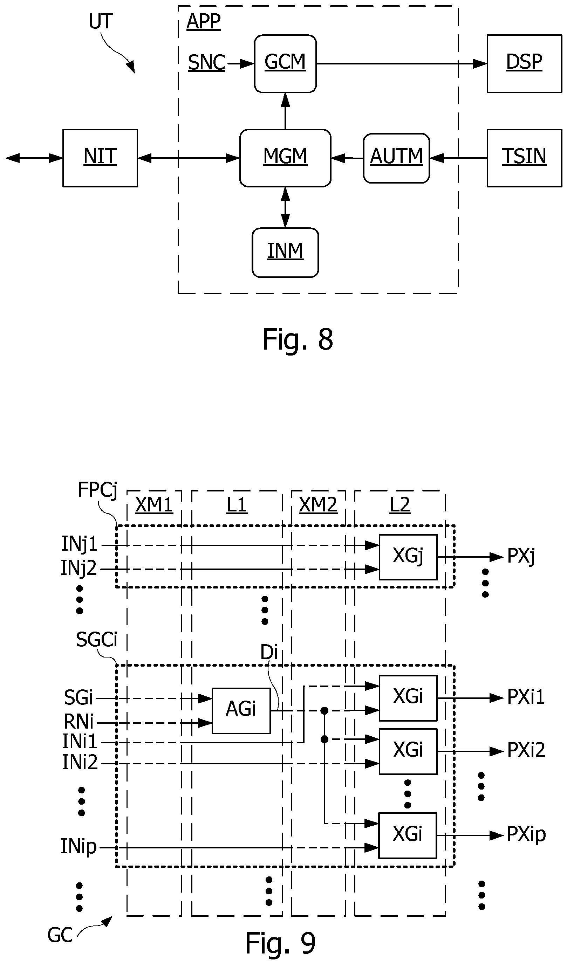

Figure 8 illustrates a functional architecture of the application APP, according to an embodiment. The application APP comprises a management module MGM, an initialization module INM, an authentication module AUTM, and a software component execution module GCM. The management module MGM controls the other modules INIM, RGM and GCM, and the communications between the application APP, the secure element SE and the server ASRV, through the communication circuits NIT. The authentication module AUTM performs step S2 (or S22) to trigger a user authentication, step S4 (or step S32) to trigger the mutual authentication between the server ASRV and the secure element SE, step S9 (or step S25), to trigger the execution of the software component GC, and to receive and transmit the positions POSi typed by the user (step S13 or S29). The module AUTM is connected to the keypad or a touch-sensitive surface TSIN of the terminal UT. The module GCM performs the step S11 (or step S27) to execute the software component and generate and display the image frames FRM at a suitable refresh rate, the module GCM selecting at each frame, input values to be applied to the software component GC and executing the latter. The module GCM produces the image frames FRM which are displayed on the display screen DSP of the terminal UT.

Figure 9 illustrates an example of a software component GC according to an embodiment. The software component GC is a software-implemented Boolean circuit encrypted as a garbled circuit. The software component GC comprises two circuit layers L1, L2, and two interconnection matrices XM1, XM2. A first interconnection matrix XM1 receives input data INi, INj, SGi, RNi of the software component GC. The first layer L1 comprises logic gates AGi, each gate receiving two input values SGi, RNi from the matrix XM1 and providing one output value Di to the second interconnection matrix XM2. The second layer L2 comprises logic gates XGi, XGj, each gate receiving two input values from the matrix XM2, and providing one output value PXi, PXj representing a pixel value. Each of the logic gates AGi of the first layer L1 receives input values SGi, RNi of the software component GC, selected by the matrix XM1. Each of the logic gates XGi of the other layer L2 receives one input value INi of the software component and one output value provided by one logic gate AGi belonging to a previous layer (L1), these input values being selected by the matrix XM2. Each of the logic gates XGj of the layer L2 receives two input values INj1, INj2 of the software component, these input values being selected by the matrix XM1 and/or XM2. This structure of the software component enables parallel processing, since all logic gates in a same circuit layer L1, L2 can be processed at the same time.

According to an embodiment, to generate image frames FRM as shown in Figure 6A, the software component GC comprises one circuit SGCi for each of the segments SG that can be visible or invisible in the image frames FRM, and one circuit FPCj for each pixel PXj distinct from a segment pixel PXi, for example around the segments SG or in the banner frame BNF. Thus, in the example of Figure 6A, the image frames FRM to be displayed comprise 70 segments (10 key label digit x 7 segments per digit) for the keypad KYP, plus 14 segments (2 digits x 7 segment per digit) for the validation code CC, the software component comprises 84 circuits SGCi. Each of the circuits SGCi comprises one logic gate AGi in the circuit layer L1, and as much logic gates XGi in the circuit layer L2, as the number of pixels PXi1, PXi2, ... PXip forming the segment SG as displayed in the image frames FRM.

The gate AGi performs for example a logical operation such as AND, OR, NAND, NOR, to display each visible segment with a probability of 50%, and each invisible segment with a probability of 0% to be visible. Each of the gates XGi performs a logical XOR operation with an input INi of the software component. The gate AGi receives one segment input value SGi and a corresponding random input value RNi. The output Di of the gate AGi is connected to an input of all gates XGi of the circuit SGCi. Each gate XGi also receives one of the input values INi1-INip and provides one pixel value PXi1-PXip to the output of the circuit GC.

Each of the circuits FPCj comprises one logic gate XGj performing a logical XOR operation per pixel PXj controlled by the software component GC and distinct from a segment pixel in the image frames FRM. Each of the gates XGj receives two input values INj1, INj2 of the software component GC and provides one pixel value PXj. Each of the gates XGj can be located either in layer L1 or in layer L2. The number of input values INi, INj can be limited to a value around the square root of the number of pixels PXi, PXj controlled by the software component GC.

The circuits SGCi are configured to display the visible segments of the digits of the key labels KYL and validation code SG with a probability of 50% and the invisible segments of these digits with a probability of 0%. The structure of the software component GC can be adapted to apply other display probabilities to the visible and invisible segments of the digits to be displayed. Of course, the digits can also be controlled and/or arranged (e.g. with more segments) to display other signs than numbers such as alphabetic characters or more generally symbols including ASCII characters.

In the example of the software component of Figure 9, one input INi or INj can be connected to several logic gates XGi, XGj, such that there are fewer inputs INi, INj than the number of logic gates XGi plus twice the number of logic gates XGj.

The interconnection matrix XM2 defines which pixel generated by the software component belongs to a segment SG. According to one embodiment, the position, orientation and shape of each segment SG are varied by one or several pixels, depending on the display resolution of the user terminal, from one software component to another. This provision makes it more difficult to perform a machine optical recognition of the displayed symbols.

It may be observed that the term "segment" as used herein designates a set of pixels that are controlled by a same one of the segment input values SGi. The set of pixels forming a segment is not necessarily formed of adjacent pixels, but can comprise groups of adjacent pixels as the segments forming a key label KYL. In addition, the pixels forming a segment are all visible or all invisible in one displayed image frame FRM.

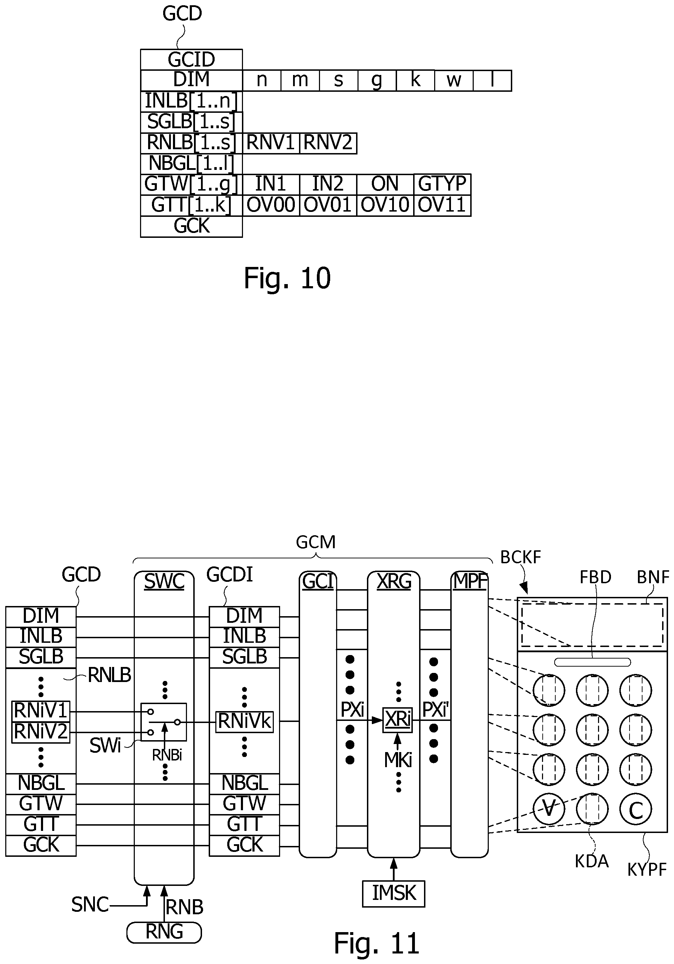

Figure 10 illustrates the structure and content data GCD defining the software component (which is transmitted in step S8 or S24), when it is designed as a garbled circuit, according to an embodiment. The data GCD comprises:

> a unique software component identifier GCID,
> a number set DIM comprising a number n of input values INi, INj, a number of output values m, a number s of segment input values SGi or random input values RNi, a number g of gates AGi, XGi, XGj, a number k of gates AGi, a number w of wires in the circuit, and a number 1 of circuit layers L1, L2 in the circuit GC,
> an input data table INLB comprising all values of the inputs INi, INj of the circuit GC, for example numbered from 1 to n, as specified for the execution of the software component,

a segment table SGLB comprising all values of the segment inputs SGi of the software component GC, numbered from 1 to s, as specified for the execution of the software component,

a random data table RNLB comprising the random values RNi, numbered from 1 to s,

a gate wire table GTW defining two input wires numbers IN1, IN2, an output wire number ON and a type identifier GTYP of each logic gate AG, XG of the software component GC, the gates of the circuit being numbered from 1 to g, and

a gate truth table comprising four values OV00, OV01, OV10, OV11 for each of the logic gates AG of the software component GC.

In the example of Figure 9, the type GTYP specifies that the corresponding logic gate performs either an XOR operation or another logical operation such as AND, OR, NOR, NAND.

According to an embodiment, the input values INi, SGi, RNi, INj and the output values Di, PXi, PXj of the logic gates AGi, XGi, XGj, each representing a binary logical state 0 or 1, are defined by numbers of several bits, for example 64 or 128 bits. In this way, each input and output within the garble circuit GC has only two valid values, and all the other possible values, when considering the size in bits of these values, are invalid. When the software component GC is generated, the two valid values of each input SGi, RNi, INi, INj of the software component are randomly chosen, provided that the least significant bit of the two valid values are different, these least significant bits being used, when computing the output value of one of the logic gates, to select one value in the truth table of the logic gate.

The truth table GTT[i] of each logic gate AGi, comprises four values OV00, OV01, OV10, OV11, each corresponding to a combination (0, 0), (0, 1), (1, 0), (1, 1) of binary input values corresponding to the input values of the logic gate. The topology of the software component may be defined in the table GTW, by numbering each wire of the software component, i.e. each input wire of the software component from 1 to (n+2s) and each output of the logic gates from (n+2s+1) to (n+2s+g), and by associating to each logic gate AGi, XGi, XGj one record of the table GTW comprising two wire numbers IN1, IN2 to the two inputs of the gate and one wire number ON to the output of the gate. The wire numbers of the outputs of the software component GC are numbered from (n+2s+g-m+1) to (n+2s+g).

According to an embodiment, the table RNLB contains both valid values RNV1, RNV2 corresponding respectively to the logical states 0 and 1, of each of the random input values RNi. Each value RNV1, RNV2 can be equal with a same probability to either one or the other of the two valid values of the random value RNi corresponding respectively to the states 0 and 1.

The XOR gates XGi, XGj can be executed either by using a truth table which is encoded in the table GTT or by applying XOR operations to each pairs of bits of same rank in the input values of the gate. In the latter case, the field GTYP of the table GTW defines whether the gate is a XOR gate or another gate, and the table GTT comprises one record for each gate AGi only.

According to an embodiment, each value in the tables INLB, SGLB, RNLB, GTT is encoded by a 128-bit word, and each record of the table GTW is encoded on a 64-bit word, the wire numbers IN1, IN2, ON being encoded on 21-bit words. The table GTW can be transmitted from the server ASRV to the terminal UT in a compressed form, for example using the gzip compression scheme.

According to an embodiment, the order of the logic gates in the gate tables GTW, and GTT can be defined randomly, provided that the table records GTW[i] and GTT[i] at the index i refer to the same gate.

Figure 11 illustrates the module GCM, configured to execute a software component and to generate the image frames FRM, according to an embodiment. The module GCM executes the software component each time a new image frame is to be generated, i.e. at a frame refresh rate equal to or greater than 30 Hz. To this purpose the module GCM can be activated by a synchronization signal SNC having for example a rising edge each time a new image frame must be generated. The module GCM comprises a switching module SWC, a software component interpreter GCI, an XOR masking circuit XRG and a pixel mapping module MPF. The switching module SWC receives the synchronization signal SNC and the structure and content data GCD defining the software component GC to be executed, and loads the data to be processed by the next execution of the software component GC in an input data structure GCDI. Thus, the switching module SWC transmits the data DIM, INLB, SGLB, NBGL, GTW, GTT and GCK without modification to the structure GCDI.

According to an embodiment, the switching module SWC performs switching operations SWi to select one or the other of the two valid values RNiV1, RNiV2 of each input random value RNi. Each switching function SWi is controlled by a respective bit RNBi of a random number RNB having s bits, generated by a random number generation function RNG, s being the number of the random values RNi to be input to the software component GC or the total number of segments SGi of all the digits to be displayed. Each switching operation SWi provides for each of the random values RNi a randomly selected value RNiVk which is stored in the structure GCDI. As a result of the selection of one of the two valid values RNiV1, RNiV2 of the random values RNi (the visible segments SG to be displayed corresponding to an input data SGi set to the state one), the output of the corresponding AND gate AGi is set to state either 0 or 1, depending on the logical state of the selected random value RNiVk. As a consequence, the visible segments SGi appear in each frame FRM with a probability equal to the probability of the random input value RNi to be set to state 1. If the number RNB is a true random number, this probability is equal to 50%.

The module GCI is a dedicated interpreting module configured to successively execute each of the logic gates of the first circuit layer L1, as defined by the data in the input data structure GCDI, and then each of the logic gates of second circuit layer L2. To this purpose, the interpreting module GCI can use a wire table receiving the value of each wire of the software component GC, written in the table at an index corresponding to the wire number of the wire value. The wire table is first loaded with the input values INi, INj, SGi, RNiVk of the software component, written in the table at indexes (between 1 and n+2s) corresponding to wire numbers assigned to the input values. Then the computed output value of each executed logic gate is written in the wire table at an index corresponding to the wire number of the output value. At the end of the software component execution, the wire table comprises the values of the outputs of the software component at indexes from (n+2s+g-m+1) to (n+2s+g).

The output value of each logic gate can be computed by applying a non-reversible function applied to both input values of the gate and to one value selected in the truth table of the gate, as a function of the least significant bit of each of the two input values:

$$OV = PF1(IN1, IN2, G) \tag{1}$$

where IN1 and IN2 represent the input values of the gate, G = GTT[IN1 {0} //IN2{0}], IN1{0} and IN2{0} represent the least significant bit of the input values IN1, IN2, "//" represents the bit concatenation operator, GTT represents the four-element truth table of the gate, and PF1 represents the non-reversible function.

According to an embodiment, the function PF1 can use an encryption function such as AES (Advanced Encryption Standard) using an encryption key assigned to the software component. In this case, the encryption key GCK can be stored in the structure and content data GCD of the software component GC. For example, the output value OV of a logic gate can be computed as follows:

$$OV = AES(GCK,K) \oplus K \oplus G \tag{2}$$

with K = CF(IN1,IN2) ⊕ T, "⊕" represents the Exclusive OR (XOR) operator, T represents a number assigned to logic gate, for example the number of the logic gate, and can also depend on the values of the inputs IN1, IN2, CF represents a combination function, and AES(GCK,K) represents an encrypted value of K by the AES encryption algorithm using the encryption key GCK. The combination function can be an XOR operation or an operation in the form:

$$CF(IN1,IN2) = SH(IN1,a) \oplus SH(IN2,b), \tag{3}$$

SH(X,a) representing a left shift operation of X by a number "a" of bits.

The least significant bit of each output data of the software component GC provided by the module GCI is considered as a pixel value PXi, PXj. The module XRG combines each pixel value PXi (least significant bit of each output value provided by the software component) with a respective mask bit value MKi belonging to an image mask IMSK provided in the structure and content data GCD. The combination operation used can be an XOR operation XRi. The respective least significant bits of the output values PXi, PXj of the software component represents white noise since the output values of the software component including the least significant bit thereof are randomly chosen. Thus the image parts generated by the software component are in an encrypted form, and are decrypted using the image mask IMSK.

The image mask IMSK comprises the message MSG, such that when combined with the pixels PXj provided by the software component GC, the message MSG becomes intelligible and combined with segments SG of the validation code CC. The image mask IMSK can also be configured to make visible the pixels PXi of a digit segment SG corresponding to a segment input value SGi fixed to the binary state 0 (segment configured to be invisible). In this way, the segment is always visible (with a probability of 100%) in the generated image frames FRM. Another way to configure a segment always visible or invisible is to attribute a same value to the two random values RNiV1, RNiV2 corresponding to the related segment input value SGi in the transmitted structure and content data GCD.

According to one embodiment, the final mask IMSK is transmitted to the terminal UT in step S8 or S24 using another communication channel, for higher security.

According to one embodiment, the final mask IMSK is generated by the secure element SE as a function of the transaction data TT received in step S2 (Figure 3), and transmitted to the user terminal UT before the latter executes the software component in step S11. In the embodiment of Figure 4, the user terminal UT may transmit a request for the final mask IMSK to the secure element SE, the request comprising the transaction data TT (or the message MSG) that are needed to generate the mask IMSK to display the message MSG. In this way, a terminal without the secure element cannot display the image frame FRM. Alternately or in combination, other data needed to execute the software component GC may be stored and provided to the terminal UT by the secure element SE before the terminal UT executes the software component GC in steps S11 or S27. These data may be previously and securely transmitted by the server ASRV to the secure element SE. According to an example, the cryptographic data GCK needed to execute the software component GC may be provided by the secure element SE to the user terminal UT.

The interconnection matrices XM1, XM2 define where the pixels PXj corresponding to the input values INj and the pixels PXi corresponding to the segment input values SGi are displayed in the image frames FRM. The input values INi, INj define in relation with the image mask IMSK if the corresponding pixel PXi, PXj in output of the software component GC is visible or invisible, the visibility of the pixels PXi depending also on the corresponding value of the random input RNi. The respective binary states of the input values INi, INj can be randomly selected at the time the software component is generated, the image mask IMSK being then generated as a function of the selected binary states of the input values INi, INj, the interconnection matrices XM1, XM2 and the image frame FRM to be displayed which defines the visible and invisible pixels in the image frame.

The mapping module MPF inserts groups of pixels values PXi' provided by the module XRG, at suitable positions into a background image frame BCKF to generate one of the image frames FRM to be displayed. In particular, the module XRG provides a group of pixels PXi' which forms the banner frame BNF as shown in Figure 7, and groups of pixels PXi' which form each of the key labels KYL of one keypad frame KYPF to be displayed in a frame FRM. The mapping module MPF inserts these groups of pixels in respective predefined locations in the background image frame BCKF to generate one of the image frames FRM as shown in Figure 6A. In one embodiment, the module XRG outputs a directly displayable image frame. In this case, the mapping module is not mandatory.

The transmission of the two valid values of the random inputs RNi in the structure and content data GCD of the software component GC, enables introduction of randomness in the execution and output data of the software component at a very low cost. In contrast, a software component producing random output data would require to introduce a random generator in the software component, which cannot be obviously realized without adding complexity to the garbled circuit, and thus without increasing the size of the structure and content data GCD defining the software component. In addition, the transmission of the two valid values RNiV1, RNiV2 of the random inputs RNi does not reduce the security of the introduction of the password PC and validation code CC, since the correspondence between each random input value RNiV1, RNiV2 and a binary value 0 or 1 thereof cannot be established easily.

According to one embodiment, each time the terminal UT has to perform a new authentication, a new software component GC displaying a keypad KYP with a different key layout and displaying a different validation code CC, is executed in step S11 or step S27.

According to an embodiment, in order to avoid the transmission of one software component GC (in step S8 or step S24), each time the user terminal is required to perform a new authentication, several alternative software components (defined by the structure and content data GCD) can be downloaded in the terminal UT in one time, and the terminal UT selects a non-already executed software component each time it has to perform a new authentication. As an example, several software components are downloaded with the application APP when the latter is downloaded and installed in a user terminal UT. Then, when one or several software components are used, a new set of software components can be downloaded from the server ASRV to the terminal UT, for example when the terminal has an efficient network connection.

According to an embodiment, several alternative software components are stored in the terminal UT in an encrypted form, and each time the terminal UT must execute a new software component, the server ASRV sends a corresponding decryption key to the user terminal.

According to an embodiment, only a part of each of the software components is downloaded into the terminal UT. The downloaded part of each software component can include, when the software components are garbled circuits, the data GCID, DIM, NBGL, GTW with or without the table RNLB. Each time the terminal UT has to perform a new authentication, the server ASRV only transmits to the terminal the data INLB, SGLB, GCK and IMSK, in step S8 or S24. Then, the terminal UT transmits the identifier GCID of the software component used for authentication to the server ASRV, for example in step S10 or S26. When it receives a software component identifier GCID from a user terminal UT, the server ASRV checks in the database UDB that the received identifier corresponds with a next unexecuted or valid software component previously transmitted to the terminal UT. If the received identifier does not correspond with a next unexecuted or valid software component previously transmitted to the terminal UT, the server ASRV invalidates the user authentication and the corresponding transaction. The server ASRV may also invalidate a previous transaction performed with the same software component (corresponding to the same identifier GCID).

According to an embodiment, the server ASRV can assign a validity indicator to each software component it generates for a user terminal. The server ARSV sets the validity indicator to valid when it transmits the corresponding software component to a user terminal in step S8 or S24, and to invalid when it receives the corresponding message ARP in step S13 or S29. In addition, the server ARSV can assign a validity period to each generated software component, a software component being set to invalid when its validity period has elapsed. The server ASRV may be configured to rejects a message ARP transmitted in step S13 or S29 when it corresponds to a software component set to invalid.

According to an embodiment, several valid software components are stored in the user terminal UT. Before executing a software component, the user terminal selects one of the valid stored software components, to be executed in step S11 or S27. Each of the valid stored software components can have rank in a list of the stored valid software components. The valid software component to be executed by the user terminal can be selected randomly, or selected as a function of its rank in the list of stored valid software components. For this purpose, the rank of the valid software component to be executed can be predefined to a value known both by the server ASRV and the terminal. The rank value of the valid software component to be executed can be also transmitted by the server ASRV to the UT terminal for example in step S10 S26 (before the execution of a software component in step S11 or S27).

When the valid software component to be executed is randomly selected by the user terminal, the server ASRV can determine the last software component executed by the user terminal from the data POSi transmitted by the latter to the server, in step S13 or S29, and by executing one after the other the valid software components that have been downloaded in the user terminal, until it executes the software component corresponding to the data transmitted in step S13 or S29. In the authentication procedure of Figure 4, the server ASRV executes the valid software components one after the other in steps S14, S15 or S30, S31, until the transmitted positions POSi correspond to stored data CC, PC. If the transmitted positions POSi do not correspond to the stored data PC, CC with each of the valid software components in the user terminal, the user is not authenticated. This embodiment adds a level of security since a hacker can no more determine the displayed images by executing the last software component transmitted to the terminal. In this embodiment, the hacker has also to determine which software component was executed by the terminal.

It can be decided to prevent a second execution of a same software component for security reasons. To this purpose, a valid software component can be set to invalid after its execution by the user terminal UT. For a higher security level, all the valid software components of a set of software components stored in the terminal can be set to invalid after the execution by the terminal of one of these valid software components.

If the server ASRV determines that the data POSi are obtained from an invalid software component, the server rejects the authentication of the user of the terminal.

Only a data part of each of software components of a software component set can be downloaded into the terminal UT. In this case, each time the terminal UT has to perform a user authentication, the server ASRV transmits to the terminal a complementary data part of an already stored data part of one or several software components, in step S8 or S24, such that the terminal can execute any one of these several software components, in step S11 or S27. The output mask IMSK, which is used to decrypt the output data provided by a software component may be the complementary data part that is transmitted to the user terminal in step S8 or S24.

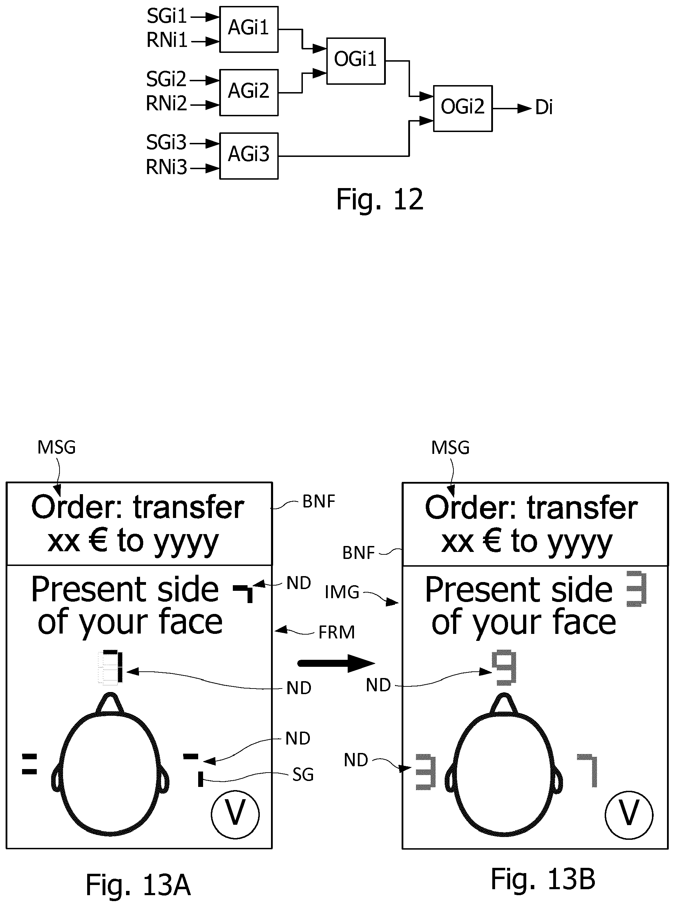

Figure 12 illustrates a part of the software component GC according to another embodiment. The circuit part disclosed in Figure 12 is intended to replace one logic gate AGi in the circuit of Figure 9. In the example of Figure 12, the circuit part comprises three AND gates AGi1, AGi2 and AGi3 and two OR gates OGi1, OGi2. Instead of having one segment input SGi and one random input RNi for each segment of the image frame FRM to be displayed with a probability lower than 100%, this circuit part comprises for one segment, three segment inputs SGi1, SGi2, SGi3 and three corresponding random inputs RNi1, RNi2, RNi3. Each of the gates AGi1, AGi2, AGi3 combines one respective segment input SGi1, SGi2, SGi3 with one respective random input RNi1, RNi2, RNi3. The outputs of the gates AGi1 and AGi2 are connected to the inputs of the gate OGi1, and the outputs of the gates AGi3 and OGi1 are connected to the inputs of the gate OGi2. The output Di of the gate OGi2 is connected to as much gates XGi as the number of pixels forming the segment controlled by the inputs SGi1, SGi2, SGi3. In this way, when all the segment inputs SGi1, SGi2, SGi3 are set to the binary state 0, the output Di of the gate OGi2 is set to the binary state 1 with a probability of 0%. When only one of the segment inputs SGi1, SGi2, SGi3 is set to the binary state 1, the output Di of the gate OGi2 is set to the binary state 1 with a probability of 50%. When only two of the segment inputs SGi1, SGi2, SGi3 are set to the binary state 1, the output Di of the gate OGi2 is set to the binary state 1 with a probability of 75%, and when all the three segment inputs SGi1, SGi2, SGi3 are set to the binary state 1, the output Di of the gate OGi2 is set to the binary state 1 with a probability of 87.5%. Depending on the corresponding input values INi1-INip and corresponding mask bit values MKi1-MKip of the mask IMSK, and the segment input values SGi1, SGi2, SGi3, it is possible to display a segment SGi with a probability fixed either to 0%, 12.5%, 25%, 50%, 75%, 82.5% or 100%. According to an embodiment, the visible segments SG are displayed in the image frames FRM with a probability randomly set to either 12.5%, 25%, 50%, 75%; 82.5% or 100%.

These probabilities or others can be obtained using other combinations of logic gates combining the three segment input values SGi1, SGi2, SGi3 and the three random input values RNi1, RNi2, RNi3.

Obviously, other probability values can be reached by the software component, by increasing the number of inputs for one segment, and thus by increasing the number of AND gates in the first circuit layer L1 and the number of combining OR gates in following circuit layers.

According to one embodiment, the visible segments are displayed with a probability decreasing as a function of the experience level of the user. At first authentications, performed from a first installation of the application APP, the visible segments SG can be displayed in the image frames FRM with high probabilities, e.g. between 75% and 100%. As the experience level of the user grows, these probabilities can be progressively reduced and finally set to randomly-selected values for example between 12.5% and 50%.

In the embodiment using garbled circuits, the generation of a software component, performed by the server ASRV in step S7 or S23, comprises generating random values representing the binary states 0 and 1 of the input bits and of the output bits of the logic gates of the software component, some of the logic gate outputs corresponding to outputs of the garbled circuit. The generation of a software component further comprises randomly selecting the interconnection matrices XM1, XM2, i.e. randomly selecting the links between the inputs of the software component and the inputs of the logic gates of the software component, and between the outputs of some logic gates and the inputs of other logic gates (definition of the table GTW). The generation of a software component further comprises defining the truth tables GTT of the logic gates of the software component, and encrypting each value of these truth tables using an encryption key. According to an example, each four values G (=GTT[IN1 {0} // IN2{0}]) of the truth table of a logic gate of the software component GC can be computed as follows:

$$G = PF2(IN1, IN2, OV) \qquad (4)$$

for each possible combination of the valid values of the inputs IN1, IN2 and the output OV, when considering the binary states corresponding to the valid values of IN1, IN2 and OV, and the logic operation performed by the logic gate, PF2 representing a non-reversible function. According to the example defined by equation (2), each four values G of the truth table of a logic gate can be computed as follows:

$$G = AES(GCK, K) \oplus K \oplus OV \qquad (5)$$

with $K = CF(IN1, IN2) \oplus T$.

As a consequence, it is very difficult to determine the binary states of the input and output values and the function of the logic gates of the software component. As a result, the functioning of the software component GC cannot be easily determined. In addition, the software component can process only the two valid values of each input of the circuit, among a huge number of invalid values. Therefore, it is not possible to apply any values to the inputs of the software component. For more details on garbled circuits, reference may be made to the document "Foundations of Garbled Circuits", Mihir Bellare, Viet Tung Hoang, Phillip Rogaway, dated October 1, 2012.

A hacker or a malware program executed by the terminal UT may be able to get the password PC input by the user in step S12 (or S28). However, the knowledge of this password is not sufficient for the hacker to be authenticated in steps S2 to S16 (or S22 to S36) since the typed positions POSi must correspond to the keypad KYP and validation code CC displayed by the execution of the software component GC transmitted to the terminal UT in step S8 (or S24). The hacker or malware has a very short time to get the keypad key layout by analyzing the displayed image frames FRM or by executing or analyzing the software component.

When the server ASRV generates the software component GC, it can be decided to use another bit rank in the values of the wires of the software component for defining the corresponding binary state of these values. The bits at the selected bit rank in the input values a logic gate AGi are used to select a data in the truth table GTT of the logic gate, and the bits at the selected bit rank in the output values PXi of the software component GC are extracted and applied to the module XRG.

According to an embodiment, the secure element SE is a smartcard comprising a display, e.g. an electronic ink display to display the message MSG including the terms of the transaction and the validation code CC which is randomly generated by the secure element SE. The software component GC may be generated so that it does not display the validation code CC. In this way, only the user having the secure element involved in the current transaction can see the validation code to be typed using the software component that is currently running on the terminal UT. The procedure of Figure 3 is directly applicable to this embodiment. The procedure of figure 4 is modified such that step S31 is performed by the secure element SE, for example before or after step S36, and in step S33, the server ASRV also transmits the validation code CC1 entered by the user. In addition, the user may check that the transaction data TT displayed by the terminal UT and the secure element SE are consistent.

Instead of displaying a keypad with a variable key layout, the software component GC and corresponding mask IMSK may be configured to display a biometric challenge, requesting the user to input a response using a sensor that may be used for instance as a biometric sensor. The sensor may be a camera, a fingerprint sensor or a microphone (or an iris sensor, a heart rate monitor, a glucose monitor, a blood pressure sensor, ...). In this case, the user may be invited during a secured enrolment procedure to introduce in a terminal such as the terminal UT, requested biometric data using one or more sensors of the terminal (and/or one or more sensors securely associated with the terminal), for example according to displayed instructions. According to examples, the user can be instructed to enter fingerprints of several or all of his fingers using a fingerprint sensor, and/or to pick up pictures of his face (e.g. left, front, right pictures), using a camera (a conventional imaging camera, or any other type of camera such as thermal or infrared camera), and/or voice recordings by saying a list of words, letters, or figures displayed by the terminal, using a microphone.

In the embodiment of Figure 3, biometric data are entered by the user and transmitted to and stored in the secure element SE during a secure personalization process of the secure element. In step S7, the software component GC is generated to display a biometric challenge defined as a function of the seed number SD. When the software component GC is executed in step S11, the user introduces the requested biometric data corresponding to the biometric challenge specified in the image frames displayed by the software component (step S12), using a sensor of or connected to the terminal UT. In step S13, the biometric data introduced by the user are transmitted to the secure element SE. In steps S14-S16, the secure element SE performs a biometric recognition algorithm (face, fingerprint, iris, voice, lips movements, etc.) corresponding to the biometric data requested to the user, to determine whether the biometric data entered by the user correspond to biometric data previously registered by the user and stored in the secure element and to the displayed biometric challenge that the secure element SE can determined using the seed number SD.

In the embodiment of Figure 4, the biometric data entered by the user are transmitted to the server ARSV and stored in a user database UDB accessible to the server. In step S23, the software component GC is generated to display a biometric challenge. When the software component GC is executed in step S27, the user introduces the requested biometric data corresponding to the biometric challenge specified in the image frames displayed by the software component (S28) using a sensor of the terminal UT or connected thereto. In step S29, the biometric data introduced by the user are transmitted to the server ARSV. In steps S30-S31, the server ASRV performs a biometric recognition algorithm (face, fingerprint, iris, voice, lips movements, etc.) corresponding to the biometric data requested to the user, to determine whether the biometric data entered by the user correspond to biometric data previously registered by the user and stored in the user database UDB and to the biometric data requested by the displayed biometric challenge. If the entered biometric data correspond to the requested data, the authentication server ASRV performs steps S32 to S4, the password PC being previously registered by the user and stored in the user database UDB.

Figure 13A illustrates an example of an image frame FRM displayed by the user terminal UT when it executes the software component GC. The image frame FRM comprises a banner frame BNF displaying the message MSG. In the example of Figure 13A, the message MSG contains information related to a transaction to be validated by the user, for example "Order: transfer xx € to yyyy". The image frame FRM further presents a biometric challenge requesting the user to capture a part of his face using a camera of the terminal UT or connected thereto. To this purpose, the image frame FRM presents a stylized human head, the left, front and right sides of the head being associated with a respective randomly chosen number ND. The image frame FRM further presents a biometric challenge "Present side <number> of your face" and a validation key "V", "<number>" corresponding to one of the displayed numbers ND.

According to an embodiment, to prevent the displayed numbers ND from being acquired using a screenshot function of the terminal UT, the numbers ND are displayed using segments SG, for example seven segments, and only a part of the segments forming each displayed numbers is displayed in each image frame generated by the software component GC. To this purpose, each visible segment SG to be displayed is present in an image frame FRM generated by the software component GC with a probability lower than 100%, for example equal to 50%. Thanks to its persistence property, the human visual system combines the image frames successively displayed by the terminal UT. Thus the displayed numbers ND become intelligible to the user, but cannot be captured using a screenshot function.

Segments SG or pixels are invisible or visible in one of the generated image frames FRM when they are displayed respectively with a background color of the image frame, or with a color different from the background color. The background color is defined by the color of the pixels around the considered segment SG, and may vary as a function of the position of the segment within the image frame FRM. In another embodiment, the segments are displayed on a background image. Each pixel of an invisible segment is displayed with the color the pixel of the background image which is located below the segment pixel.

Figure 13B shows the displayed image IMG as it is perceptible by the human visual system when the image frames FRM generated by the software component GC are displayed at a sufficiently high frequency (greater than 30 Hz) for example at 60 Hz, such that a new frame generated by the software component is displayed every 16.6 ms. As shown in the example of Figure 13B, the displayed numbers ND appear in grey to a user when visible segments to be displayed are inserted in the frames FRM with a probability lower than 100%. In the example of Figure 13B, the left, front and right sides of the face are numbered 3, 9 and 7, and the requested face side to capture is side 3, i.e. the left side of the face.

The numbers "xx" and letters "yyyy" in the message MSG can be also displayed using segments, each visible segment appearing in each generated image frame FRM with a probability lower than 100%, for example 50%.

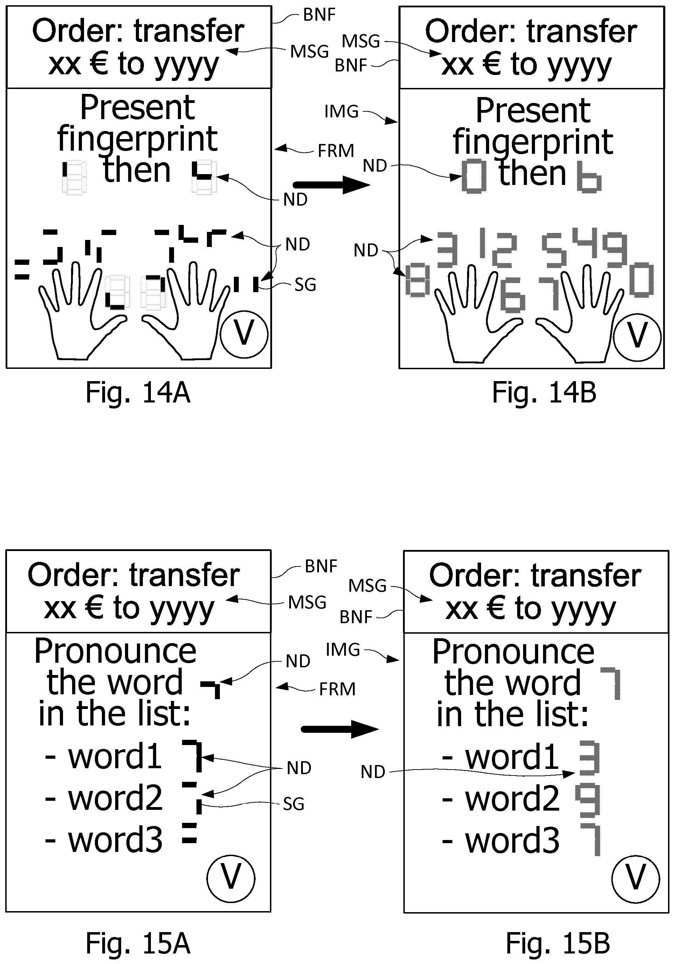

Figure 14A illustrates another example of an image frame FRM displayed by the user terminal UT when it executes the software component GC. The image frame FRM comprises the banner frame BNF displaying the message MSG. The image frame FRM further presents another biometric challenge requesting the user to enter fingerprints of designated fingers using for instance a fingerprint sensor of the terminal UT or connected thereto. To this purpose, the image frame FRM presents stylized left and right human hands, each finger being associated with a randomly chosen number ND. The image frame FRM further presents a biometric challenge "Present fingers <number> then <number>" and a validation key "V". The numbers ND are displayed using segments SG, for example seven segments, and only a part of the segments forming each displayed numbers is displayed in each displayed image frame generated by the software component GC. To this purpose, each visible segment SG to be displayed is present in an image frame FRM generated by the software component GC with a probability lower than 100%, for example equal to 50%.

Figure 14B illustrates the displayed image IMG as it is perceptible by the human visual system when the image frames FRM generated by the software component GC are displayed at a sufficiently high frequency. In the example of Figure 14B, the displayed numbers ND appear in grey to a user when visible segments to be displayed are inserted in the frames FRM with a probability lower than 100%. In this example , the back face of the hands are shown, the left hand being placed to the left of the right hand, and the ten fingers are associated respectively with the randomly chosen numbers (from left to right) 8, 3, 1, 2, 6, 7, 5, 4, 9 and 0. The requested fingerprints are numbered 0 then 6, which correspond to the fingerprints of the little finger of the right hand, and the thumb of the left hand.

Figure 15A illustrates another example of an image frame FRM displayed by the user terminal UT when it executes the software component GC. The image frame FRM comprises the banner frame BNF displaying the message MSG. The image frame FRM further presents another biometric challenge requesting the user to pronounce one or more words, using a microphone of the terminal UT or connected thereto. To this purpose, the image frame FRM presents a list of words which can be selected in a dictionary, each word being associated with a randomly chosen number ND. The image frame FRM further presents a biometric challenge "Say the word <number>" and a validation key "V".

The numbers ND are displayed using segments SG, for example seven segments, and only a part of the segments forming each displayed numbers ND is displayed in each image frame generated by the software component GC. To this purpose, each visible segment SG to be displayed is present in an image frame FRM generated by the software component GC with a probability lower than 100%, for example equal to 50%.

Figure 15B illustrates the displayed image IMG as it is perceptible by the human visual system when the image frames FRM generated by the software component GC are displayed at a sufficiently high frequency. In the example of Figure 15B, the displayed numbers ND appear in grey to a user when visible segments SG to be displayed are inserted in the frames FRM with a probability lower than 100%. In this example, the selected displayed words are "word1", "word2" and "word3", and are associated respectively with the numbers 3, 9 and 7, and the requested word to say is numbered 7, i.e. the word "word3". Instead of words, the user can be requested to say letters or numbers which can be displayed using segments SG, only a part of the segments forming each displayed letters or numbers being displayed in each image frame generated by the software component GC.

In another embodiments, the biometric challenge can be for instance "Say the words <number1>, <number2> and <number3>" or "Pronounce the letters <number1> and <number2> of the <number3> word".

Obviously, the present disclosure is not limited to the examples of Figures 13A, 14A and 15A. Other biometric challenges using symbols (alphanumeric or not) displayed using randomly visible segments can be easily imagined. For example, the biometric challenge of Figures 15, 15B can be performed using a camera of the user terminal or connected thereto. This challenge can be also combined with a facial recognition since lip-reading can be performed using video images of the face of the user. This challenge can be performed without emitting sounds.

Instead of capturing a requested part of the user face, the challenge of Figures 13A, 13B can request the user to make face movements a number of times, such as close one or two of his eyes, open his mouth, or smile.

Another example of biometric challenge can involve iris recognition using a camera of the terminal or connected thereto. This challenge can request the user to capture his left or right eye, or both of them according to a particular sequence, and/or request the user to close the captured eye a number of times.

According to an embodiment, visible and invisible segments of each number ND to be displayed appear in the frames FRM with respective probabilities such that the displayed digits are intelligible for the human visual system, thanks to the persistence of the latter. For example, the generated software components GC are configured to display the invisible segments with a probability between 0 and 15%, and the visible segments with a probability between 50 and 100%. The visible segments forming one of the numbers ND can be displayed with respective probabilities comprised between 50 and 100%, and the invisible segments in a number ND can be displayed with probabilities comprised between 0 and 15%. The display probabilities of the segments SG forming the numbers ND to be displayed can be adjusted as a function of the frame display frequency, such that the numbers ND remain intelligible for the human visual system.

The validation key "V" may be not necessary, in particular when the circuits of the terminal UT can detect when the requested biometric challenge is entered by the user.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

The methods disclosed herein may be totally of partially implemented by software programs executable by the main processor HP (CPU) of the user terminal UT, and/or at least partially by the graphic processor GP of the user terminal UT.

Further, the methods disclosed herein are not limited to displaying sensitive information such as a keypad with a randomly selected layout and a validation code (CC), displayed using flickering segments. Only the password PC of the user may be requested. Indeed, the object of such a display is to check that the user knows a secret data shared with the server ASRV and perceives information presented by the terminal in a way perceptible only by a human. Alternative challenge-response schemes can be implemented in other embodiments. According to an embodiment, the displayed message MSG may request the user to input a combination such as the sum or the multiplication of the digits of the displayed validation code CC.

In addition to this or in another embodiment, the generated frames may FRM comprise differences with a previously generated frame.

According to another embodiment, the flickering or blinking of segments may be controlled directly in/by the graphic processor, by setting pixel intensity, additive or subtractive pixel color, pixel refresh rate, or pixel flickering parameters of the graphic processor.

According to another embodiment, the challenge used to authenticate the user is transmitted to the user using other means than by displaying it on a display screen. For instance, the challenge can be transmitted to the user by audio means using an audio cryptographic algorithm such as described in "Simple Audio Cryptography", by Yusuf Adriansyah, dated April 29, 2010. According to this algorithm, an original audio sequence is decomposed into a number of source audio sequences of the same length as the original audio sequence, in a way such that the original audio sequence can be reconstructed only by simultaneously playing all the source audio sequences generated by the decomposition, and such that it is very difficult to reconstruct the original audio sequence if any one of the source audio sequence is missing. Provision may be made to play two source audio sequences simultaneously, one via the terminal UT and the other via other means such as a portable device having a memory storing a source audio sequence and a headphone playing the stored source audio sequence without a microphone of the terminal hearing it. If the user hears an intelligible audio message by playing the two source audio sequences simultaneously, it means that the source audio sequence played by the portable device complements the source audio sequence.

Further, the methods disclosed herein are not limited to authenticating a user in view of validating a transaction. The methods disclosed herein may be applied to securely transmit sensible or secret information to or from a user, or more generally to securely perform a sensitive operation in a non-secure environment such as in a user terminal (smartphone, connected device, ...).

Further, the methods disclosed herein are not limited to a method comprising displaying image frames and introduction of secret data (PC, CC) using a single user terminal. The methods disclosed herein may be applied to securely authenticate a user on another connected device, the frame images being displayed on the user terminal or on a remote display such as a smartwatch, virtual reality glasses or lenses, or projected on a surface or in the form of a 3D image or any IoT (Internet of Things) device having display functions or the like. Similarly, the secret data may be input in another device connected to the user terminal or using voice or gesture. Therefore, the words "user terminal" may designate a single device or a set of devices including a terminal without a display, an IoT device, a smart home terminal, and any input terminal that allows the user to enter data.

The user terminal UT may be controlled by voice or gesture. Voice command may be translated to command. Each recognized command being equivalent to one of the positions POSi. The keypad may be replaced by any other representations such as the ones requiring a gesture, following a geometric figure or tracing links between dots. Further, the input terminal may be a 3D input terminal with which the user may interact by 3D gestures in the air. Therefore the positions POSi may be 3D coordinate positions in space.

In other embodiments, the display may be any display including for example an ATM, a vending machine, a TV, a public display, a projected display, a virtual display a 3D display or a hologram. In other embodiments, the terminal may be any input equipment including for example a touch screen, a game accessory, a gesture acquisition system, a voice or sound command system.

In other embodiments, the images frames FRM are generated without applying the mask IMSK, and are displayed separately from the mask IMSK using two display devices, one of the two display devices being transparent, such as a display device in the form of eye lenses, the displayed images becoming intelligible to the user when they are superimposed with the displayed mask IMSK, the displayed white pixels of the mask being transparent and the displayed black pixels of the mask being opaque.

Further, the methods disclosed herein, introducing randomization in the execution of the software component protected against tampering and reverse-engineering, are not limited to generate blinking pixel in an image or an image frame. More generally, these methods can be used in any application in which a random state is required in a sensitive software function, protected against reverse-engineering and tampering, the software function receiving input data and providing output data. For example, these methods can be applied to protection of data without using encryption or decryption keys which are exposed to key theft. In this example, the software component is configured to provide a part of the protected data as a function of a set of random input data, each random input data having two possible values. Each combination of the random input values applied to the software component is used to compute a respective part of the protected data. The number of combinations of the random input values defines the number of data parts that can be computed by executing the software component. As an example, the data to be protected can be images, and the data parts of such images can be pixel values of an image or color component values of the image pixels, the execution of the software component providing a pixel value or a part thereof and a position of the pixel in the image (see "Secure Image Datasets in Cloud Computing", X. Arogya Presskila, P. Sobana Sumi, in International Journal of Advanced Research in Computer Science and Software Engineering, Vol. 4, Issue 3, March 2014). The parts of the data to be protected that are each computed by one execution of the software component applied to one combination of the input values can be as small as desired. For instance, the software component can be configured to provide by one execution a point of a Gaussian curve or a value that is used to compute a histogram, the data part value corresponding to the highest value computed by the software component or to the value having the highest occurrence number in the histogram. Only a part of the protected data can be made accessible when only a part of the two alternative values of the input data of the software component is provided, only one value being provided for the other input data of the software component.

**Claims**

1.  A method for performing a sensitive operation requiring authenticating a user, the method comprising:

    receiving by a user terminal (UT), from an authentication server (ASRV), a software component (GC) configured to generate random pixels (PXi) having a probability lower than 100% to be visible in image frames to be displayed;
    executing the software component by the user terminal, at a rate corresponding to a frame display refresh rate, to generate an image frame at the display refresh rate;
    displaying the generated image frames at the frame display refresh rate, the displayed image frames including information (SD, KYL, CC, ND) which is machine unintelligible as being formed of the random pixels, the information becoming intelligible to a user at the display refresh rate;
    acquiring a response (POSi) from the user in relation with the displayed information;
    transmitting the response or first secret data (PC1) derived from the response using the information, to a secure processor (SE) connected to the user terminal, the user being authenticated by the secure processor when the first secret data correspond to second secret data (PC) shared by an authenticate user and the secure processor, the sensitive operation being performed by the secure processor if the user is authenticated.

2.  The method of claim 1, further comprising:

    generating the information (SD, CC) by the secure processor (SE);
    encrypting the information such that only the authentication server (ASRV) can decrypt the encrypted information, and transmitting the encrypted information to the authentication server, the software component (GC) being generated by the authentication server as a function of the information; and
    transmitting the acquired response (POSi) from the user terminal to the secure processor; and
    deriving, by the secure processor, the first secret data (PC1) from the acquired response using the information (SD-KYL).

3.  The method of claim 1, further comprising:

    generating the information (SD, CC) by the authentication server (ASRV), the software component being generated by the authentication as a function of the information;
    transmitting the acquired response (POSi) from the user terminal to the authentication server;
    deriving, by the authentication server, the first secret data from the acquired response using the information (SD);
    encrypting, by the authentication server, the first secret data such that only the secure processor (SE) can decrypt the encrypted information; and

transmitting the encrypted first secret data to the secure processor.

**4.** The method of claim 3, further comprising:

transmitting the acquired response (POSi) from the user terminal to the secure processor (SE);
generating a signature of the acquired response (POSi) by the secure processor;
transmitting the signature to the authentication server (ASRV); and
verifying the signature by the authentication server, the authentication of the user being allowed only when the signature is correct.

**5.** The method of one of claims 1 to 4, wherein the displayed image frames include data (TT) related to the sensitive operation, the software component being generated as a function of the data related to the sensitive operation.

**6.** The method of one of claims 1 to 5, wherein the information (SD, CC) comprises one of the following:

a secret code (CC) displayed in the displayed image frames (FRM) so as to be machine unintelligible as being formed of the random pixels, the secret code becoming intelligible to a user at the display refresh rate, the user being requested to provide the secret code in the acquired response (POSi), the first secret data (PC1, CC1) comprising an acquired secret code (CC1), the user being authenticated when the acquired secret code corresponds to the displayed secret code,
an ordered series of key labels of a keypad to be displayed in the image frames (FRM), the response from the user comprising key positions (POSi) of keys of the keypad selected by the user, and
a biometric challenge to be displayed in the image frames (FRM), the response acquired from the user comprising acquired biometric data inputted by the user using a biometric sensor, wherein the acquired biometric data are transmitted to:

the secure processor (SE) which compares the acquired biometric data with reference biometric data stored by the secured processor, or
the authentication server (ASRV) and if the acquired biometric data correspond with reference biometric data stored by the authentication server, the authentication server transmits to the secured processor (SE) the first secret data (PC1) encrypted such that only the secure processor (SE) can decrypt the encrypted information.

**7.** The method of one of claims 1 to 6, wherein the software component (GC1) is configured to provide the output data (PXi) in one of the two binary states with a probability comprised between 12.5% and 87.5% or set to 50%, in response to the random selection.

**8.** The method of one of claims 1 to 7, wherein the software component (GC) is configured to generate encrypted parts (MSG, CC, KYL) of an image frame (FRM), the method further comprising:

executing the software component;
decrypting each generated encrypted image frame parts, using a decrypting mask (IMSK) which is transmitted from the authentication server (ASRV);
inserting each decrypted image frame parts in an image frame background (BCKF) to generate an image frame (FRM); and
displaying the generated image frame.

**9.** The method of one of claims 1 to 8, wherein the software component is encoded as a garbled circuit (GC) comprising circuit inputs (SGi, RNi, INi, INj), circuit outputs (PXi, PXj), logic gates (AGi, XGi, XGj) and wires, each logic gate having two inputs and one output, each wire having a first end connected to one of the circuit inputs or to one of the logic gate outputs and a second end connected to one of the logic gate inputs or to one of the circuit outputs, the garbled circuit being generated by selecting a valid data for each binary state of each of the wires, and by computing for one logic gate of the garbled circuit, truth table values as a function of each valid data of each input of the logic gate, each valid data of the output of the logic gate and a logic operation performed by the logic gate.

**10.** A user terminal configured to:

receive by the user terminal, from an authentication server (ASRV), a software component (GC) configured to generate random pixels (PXi) having a probability lower than 100% to be visible in image frames to be displayed;

execute the software component by the user terminal, at a rate corresponding to a frame display refresh rate, to generate an image frame at the display refresh rate;

display the generated image frames at the frame display refresh rate, the displayed image frames including information (KYL, CC) which is machine unintelligible as being formed of the random pixels, the information becoming intelligible to a user at the display refresh rate;

acquire a response (POSi) from the user in relation with the displayed information;

transmit the response or first secret data (PC1) derived from the response using the information, to a secure processor (SE) connected to the user terminal, the user being authenticated by the secure processor when the first secret data correspond to second secret data (PC) shared by an authenticate user and the secure processor, and the sensitive operation being performed by the secure processor if the user is authenticated.

11. The terminal of claim 10, configured to execute the operations performed by a terminal in the method of one of claims 2 to 9.

12. A secure element configured to execute the operations performed by a secure processor in the method of one of claims 1 to 9, wherein the secure element (SE) is connected to a main processor (HP) of a terminal (UT).

13. A server configured to execute the operations performed by a server in the method of one of claims 1 to 9, the server (ASRV) being linked to the terminal (UT) through a data transmission network (NT).

14. A computer program product loadable into a computer memory and comprising code portions which, when carried out by one or more processors of a computer, configure the computer to carry out the method of one of claims 1 to 9.

Fig. 1

Fig. 2

Fig. 3

Fig. 4

| ASRV | | UT | | SE |
|------|--|----|--|----|
| SKA | | | | SKC SD1 |
| | | | | PKA |

POSi(SD2,CC1)  →  S41  PRQ  →  S42

S3-S15

S43 — SKW,PKW = CF1(SD1)

POSi(PC,CC2)  S44 — Str. SKW,PKW

S3-S15

S45  S46 — Str. PC

Fig. 5

Order: transfer
xx € to yyyy — MSG
— BNF
← FRM
FBD

KY

KYL
SG

KYPF

Fig. 6A

Fig. 6B

CC
BN
MSG

Order: transfer
xx € to yyyy

IMG →

FBD

KY

KYL

KYP

CC  SG

Order: transfer
xx € to yyyy

MSG

BNF

Order: transfer
xx € to yyyy

SG        MSG

BN

Order: transfer
xx € to yyyy

DL      CC          MSG

Fig. 7

## Fig. 8

## Fig. 9

Fig. 10

Fig. 11

Fig. 12

Fig. 13A

Fig. 13B

Order: transfer
xx € to yyyy

Present
fingerprint
then

BNF
MSG MSG
MSG BNF
IMG
FRM
ND
ND
SG

Order: transfer
xx € to yyyy

Present
fingerprint
then

ND

**Fig. 14A**

**Fig. 14B**

Order: transfer
xx € to yyyy

Pronounce
the word
in the list:

- word1
- word2
- word3

BNF
MSG
MSG
BNF
ND IMG
FRM
ND
SG
ND

Order: transfer
xx € to yyyy

Pronounce
the word
in the list:

- word1
- word2
- word3

**Fig. 15A**

**Fig. 15B**

Europäisches Patentamt
European Patent Office
Office européen des brevets

## EUROPEAN SEARCH REPORT

Application Number

EP 18 15 7472

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/085974 A1 (LELEU JEAN-LUC [FR]) 24 March 2016 (2016-03-24) * paragraphs [0035], [0040] - [0042] * * paragraphs [0065] - [0087] * * figures 1-9 * | 1-14 | INV. G06F21/36 H04L29/06 H04L9/32 |
| X | FR 3 039 948 A1 (SKEYECODE [FR]) 10 February 2017 (2017-02-10) * page 8, line 1 - page 26, line 18 * * figures 1-10 * | 1-14 | ADD. G06Q20/20 G06F3/0488 G06F21/83 |
| E | EP 3 319 067 A1 (SKEYECODE [FR]) 9 May 2018 (2018-05-09) * paragraphs [0027] - [0112] * | 1,3,5-14 | |
| E | EP 3 319 069 A1 (SKEYECODE [FR]) 9 May 2018 (2018-05-09) * paragraphs [0028] - [0125] * | 1,3,5-14 | |

TECHNICAL FIELDS SEARCHED (IPC)

G06F
G06Q
H04L

The present search report has been drawn up for all claims

| Place of search | Date of completion of the search | Examiner |
|---|---|---|
| Munich | 23 July 2018 | Ghomrasseni, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 7472

23-07-2018

| Patent document cited in search report | | | Publication date | Patent family member(s) | | | Publication date |
|---|---|---|---|---|---|---|---|
| US 2016085974 | A1 | | 24-03-2016 | EP | 2673732 | A1 | 18-12-2013 |
| | | | | EP | 3264305 | A1 | 03-01-2018 |
| | | | | FR | 2971599 | A1 | 17-08-2012 |
| | | | | US | 2014040633 | A1 | 06-02-2014 |
| | | | | US | 2016085974 | A1 | 24-03-2016 |
| | | | | US | 2017372083 | A1 | 28-12-2017 |
| | | | | WO | 2012107698 | A1 | 16-08-2012 |
| FR 3039948 | A1 | | 10-02-2017 | CN | 108141350 | A | 08-06-2018 |
| | | | | EP | 3332504 | A1 | 13-06-2018 |
| | | | | FR | 3039948 | A1 | 10-02-2017 |
| | | | | KR | 20180037254 | A | 11-04-2018 |
| | | | | WO | 2017021657 | A1 | 09-02-2017 |
| EP 3319067 | A1 | | 09-05-2018 | CN | 108009418 | A | 08-05-2018 |
| | | | | EP | 3319067 | A1 | 09-05-2018 |
| | | | | KR | 20180048424 | A | 10-05-2018 |
| EP 3319069 | A1 | | 09-05-2018 | CN | 108021793 | A | 11-05-2018 |
| | | | | CN | 108021800 | A | 11-05-2018 |
| | | | | EP | 3319069 | A1 | 09-05-2018 |
| | | | | EP | 3319070 | A1 | 09-05-2018 |
| | | | | KR | 20180048428 | A | 10-05-2018 |
| | | | | KR | 20180048429 | A | 10-05-2018 |
| | | | | US | 2018144112 | A1 | 24-05-2018 |
| | | | | US | 2018145827 | A1 | 24-05-2018 |
| | | | | US | 2018165443 | A1 | 14-06-2018 |
| | | | | US | 2018196927 | A1 | 12-07-2018 |
| | | | | US | 2018196952 | A1 | 12-07-2018 |
| | | | | US | 2018198774 | A1 | 12-07-2018 |
| | | | | US | 2018198784 | A1 | 12-07-2018 |
| | | | | WO | 2018083088 | A1 | 11-05-2018 |
| | | | | WO | 2018083089 | A1 | 11-05-2018 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012107698 A

### Non-patent literature cited in the description

- **MIHIR BELLARE ; VIET TUNG HOANG ; PHILLIP ROGAWAY.** *Foundations of Garbled Circuits,* 01 October 2012
- **YUSUF ADRIANSYAH.** *Simple Audio Cryptography,* 29 April 2010
- **X. AROGYA PRESSKILA ; P. SOBANA SUMI.** Secure Image Datasets in Cloud Computing. *International Journal of Advanced Research in Computer Science and Software Engineering,* March 2014, vol. 4 (3